# EUROPEAN PATENT APPLICATION

(11) **EP 4 629 699 A1**
(43) Date of publication of application: **08.10.2025**
(21) Application number: 23910180.1
(22) Date of filing: 14.12.2023
(51) Int. Cl.: H04W 40/28

(54) **COMMUNICATION METHOD AND COMMUNICATION APPARATUS**

(30) Priority: 27.12.2022 CN 202211686108; 14.02.2023 CN 202310159320; 17.02.2023 CN 202310172222
(71) Applicant: Huawei Technologies Co., Ltd., Shenzhen, Guangdong 518129 (CN)
(72) Inventor: ZHANG, Roujia, Shenzhen, Guangdong 518129 (CN); SUN, Fei, Shenzhen, Guangdong 518129 (CN); ZHU, Yuanping, Shenzhen, Guangdong 518129 (CN); SHI, Yulong, Shenzhen, Guangdong 518129 (CN)
(74) Representative: Gill Jennings & Every LLP
(86) International application number: PCT/CN2023/138778
(87) International publication number: WO 2024/140250

(57) **Abstract**

This application provides a communication method, including: An access network device sends first information to a terminal device accessing a first relay node, determines second area information, and adds, to a radio access network-based notification area RNA of the terminal device, a second area indicated by the second area information. The RNA of the terminal device includes a first area, the first area is an area in which the terminal device is located when the first relay node is connected to a first donor, the first information is used for prohibiting the terminal device from sending a radio access network-based notification area update RNAU, and the second area information indicates a second area in which the terminal device is located when the first relay node is connected to a second donor. According to the communication method provided in this application, after a donor connected to the first relay node is switched, the terminal device accessing the first relay node skips initiating the RNAU, and a network side can correctly find the terminal device through paging.

## Description

This application claims priorities to Chinese Patent Application No. 202211686108.1, filed with the China National Intellectual Property Administration on December 27, 2022 and entitled "COMMUNICATION METHOD AND COMMUNICATION APPARATUS", to Chinese Patent Application No. 202310159320.0, filed with the China National Intellectual Property Administration on February 14, 2023 and entitled "COMMUNICATION METHOD AND COMMUNICATION APPARATUS", and to Chinese Patent Application No. 202310172222.0, filed with the China National Intellectual Property Administration on February 17, 2023 and entitled "COMMUNICATION METHOD AND COMMUNICATION APPARATUS", all of which are incorporated herein by reference in their entireties.

### TECHNICAL FIELD

This application relates to the field of communication technologies, and in particular, to a communication method and a communication apparatus.

### BACKGROUND

With development of communication technologies, a relay networking technology is widely used. An IAB architecture is provided in the relay networking technology. The IAB architecture includes an integrated access and backhaul (integrated access and backhaul, IAB) donor, one or more IAB nodes, and one or more terminal devices. The IAB node is connected to the IAB donor directly or via another IAB node, and the terminal device is connected to the IAB donor or the IAB node through a radio air interface. In this application, the IAB node accessed by the terminal device is also referred to as an access IAB node.

Currently, the access IAB node may be installed on a mobile device (for example, a vehicle) and move with the mobile device. However, in a moving process of the mobile device, an IAB donor connected to the access IAB node may be switched. According to implementation logic of a current protocol, when an access IAB node is connected to a new IAB donor, the access IAB node needs to update, based on information about the new connected IAB donor (or a central unit (central unit, CU) included in the new connected IAB donor), area information corresponding to a subordinate cell of the access IAB node. The area information includes, for example, one or more of the following: a tracking area code (tracking area code, TAC)/a radio access network area code (ran area code, RAC)/a new radio cell global identifier (nr cell global identifier, NCGI).

According to a method in a conventional technology, the terminal device may have to frequently initiate a radio access network-based notification area update (ran-based notification area update, RNAU) or a tracking area update (tracking area update, TAU). This not only increases network implementation complexity and signaling overheads, but also causes unnecessary power consumption of the terminal device.

### SUMMARY

This application provides a communication method, so that after a donor connected to a first IAB node (an access IAB node) is switched, a terminal device accessing the first IAB node skips initiating an RNAU or a TAU, and a network side can correctly find the terminal device through paging.

According to a first aspect, this application provides a communication method, including: sending first information to a terminal device accessing a first relay node, where the first information is used for prohibiting the terminal device from sending a radio access network-based notification area update RNAU; determining second area information, where the second area information indicates a second area in which the terminal device is located when the first relay node is connected to a second donor; and adding the second area to a radio access network-based notification area RNA of the terminal device, where the RNA of the terminal device includes a first area, and the first area is an area in which the terminal device is located when the first relay node is connected to a first donor.

For example, the first relay node is an IAB node.

In this embodiment, the first relay node may be considered as a relay node accessed by the terminal device. The first relay node may be located in a mobile device (for example, a vehicle), and moves with the mobile device. It may be understood that, when the first relay node moves with the mobile device, a connected donor may change. For example, the connected donor changes from the first donor to the second donor.

In this embodiment, when the donor connected to the first relay node changes from the first donor to the second donor, area information corresponding to the first relay node changes from first area information to the second area information. In other words, when the first relay node is connected to the first donor, the area information corresponding to the first relay node is the first area information; and when the first relay node is connected to the second donor, the area information corresponding to the first relay node is the second area information.

The area information includes, for example, one or more of the following: a TAC/an RAC/a NCGI.

It should be understood that the first area information may indicate an area (also referred to as the first area in this application) in which the terminal device accessing the first relay node is located when the first relay node is connected to the first donor; and the second area information may indicate an area (also referred to as the second area in this application) in which the terminal device accessing the first relay node is located when the donor connected to the first relay node changes from the first donor to the second donor.

Specifically, the method in this embodiment may be performed by a first access network device (which may also be referred to as a first base station in this application). The first access network device may be considered as an access network device/base station including the first relay node and the first donor.

In this embodiment, the first access network device sends, to the terminal device accessing the first relay node, the first information used for prohibiting the terminal device from sending the RNAU, so that the terminal device is prohibited from initiating the RNAU when receiving the first information. In addition, the first access network device obtains the area information (namely, the second area information) corresponding to the first relay node when the first relay node is connected to the second donor, and then adds the second area information to the RNA of the terminal device, that is, updates the RNA of the terminal device. The RNA configured for the terminal device includes the first area.

It should be noted herein that a manner in which the first access network device sends, to the terminal device accessing the first relay node, the first information used for prohibiting the terminal device from sending the RNAU is not limited in this embodiment.

For example, in an implementation, the first information may be carried in a radio resource control (radio resource control, RRC) release message and sent to the terminal device.

For example, in another implementation, the first information may be sent to the terminal device in a broadcast manner.

Specifically, the first access network device may autonomously determine whether to provide the first information for the terminal device in the broadcast manner. For example, the first access network device may perform determining based on other conditions such as a quantity of terminal devices (also referred to as on-board UEs) that are relatively static with the mobile device and the first access node.

It should be noted herein that a manner in which the first access network device obtains the second area information is not limited in this embodiment.

For example, in a first implementation solution, the first access network device may receive, through a first CU in the first donor, the second area information sent by the second donor.

For example, in a second implementation solution, the first access network device may receive, through a first CU in the first donor, the second area information sent by a core network device.

For example, in a third implementation solution, the first access network device may obtain, through a first CU in the first donor, information that is in the second donor and that is used for determining the second area information, and then determine the second area information based on the information that is in the second donor and that is used for determining the second area information.

It should be noted herein that an implementation of how to add the second area information to the RNA of the terminal device is not limited in this embodiment.

In addition, it should be further noted that, in this embodiment, when the first access network device adds the second area to the RNA of the terminal device, the RNA is specifically an RNA that is configured for the terminal device in the first access network device, instead of an RNA in the terminal device.

For example, in an implementation solution, the second area information may be directly added to the RNA that is configured for the terminal device in the first access network device.

For example, in another implementation solution, the first area information in the RNA that is configured for the terminal device in the first access network device may be replaced with the second area information. That the first area information in the RNA that is configured for the terminal device in the first access network device is replaced with the second area information may be understood as: deleting the first area information, and adding the second area information.

It should be understood that, when the first access network device adds the second area information to the RNA that is configured for the terminal device in the first access network device, if the first access network device needs to page the terminal device, the first access network device also performs paging in the second area indicated by the second area information; and in addition, because the second area indicated by the second area information is the area in which the terminal device is located, even if the terminal device skips sending the RNAU to the access network device, it can be ensured that the first access network device finds the terminal device through paging. In other words, according to the communication method provided in this application, after the donor connected to the first relay node is switched, a network side can correctly find the terminal device through paging while the terminal device accessing the first relay node skips initiating the RNAU. This not only reduces signaling overheads, but also reduces power consumption of the terminal device.

It should be noted that the terminal device that skips initiating the RNAU is a terminal device (also referred to as an on-board UE) that is relatively static with the mobile device and the first access node. However, it should be understood that, in addition to the on-board UE, the terminal device accessing the first relay node may further include a terminal device (also referred to as a surrounding UE) that accesses the first relay node but is not in the mobile device. Therefore, when the first information is sent in the broadcast manner, for the terminal device, in this embodiment, if the terminal device determines that the terminal device is an on-board UE (in other words, for the on-board UE), the terminal may be prohibited, based on an indication of the broadcast first information, from sending the RNAU. However, if the terminal device determines that the terminal device is a surrounding UE (in other words, for the surrounding UE), even if the terminal device receives the broadcast first information indicating to prohibit the terminal device from sending the RNAU, the terminal device may not perform execution based on an indication of the first information. In other words, the surrounding UE may not receive or ignore the broadcast first information.

With reference to the first aspect, in a possible implementation, the method further includes: deleting the first area in the RNA of the terminal device.

It should be understood that, after the donor connected to the first relay node changes to the second donor, the area in which the terminal device is located changes from the first area to the second area. In other words, in this case, the first area cannot be used for reflecting an area in which the terminal device is located at a current moment. Therefore, in this implementation, in addition to adding the second area to the RNA that is configured for the terminal device in the first access network device, the first access network device further deletes the first area.

It should be noted herein that, in this embodiment, a sequence of deleting, by the first access network device, the first area in the RNA that is configured for the terminal device in the first access network device and adding, by the first access network device, the second area to the RNA is not limited in this embodiment.

For example, the first area may be first deleted, and then the second area is added. This manner may also be referred to as replacing the first area with the second area.

For example, the second area may be first added to the RNA that is configured for the terminal device in the first access network device, and then the first area in the RNA is deleted.

With reference to the first aspect, in a possible implementation, the second area information includes an identifier of the terminal device and/or an identifier indicating the second area.

It should be understood that, when the second area information includes the identifier of the terminal device and the identifier indicating the second area, the first access network device may update an RNA of a single terminal device in an inactive state; and when the second information includes only the identifier of the second area, the first access network device may update RNAs of a plurality of terminal devices in the inactive state.

With reference to the first aspect, in a possible implementation, the method further includes: sending the second information to the terminal device accessing the first relay node, where the second information is used for prohibiting the terminal device from sending a tracking area update TAU.

**In** this embodiment, the first access network device may further send, to the terminal device accessing the first relay node, the second information used for prohibiting the terminal device from sending the TAU. Correspondingly, the terminal device that receives the second information is prohibited from sending the TAU. It should be noted that the prohibiting sending of the TAU herein specifically means that the terminal device is prohibited from sending the TAU to the core network device.

With reference to the first aspect, in a possible implementation, the first information further indicates duration in which the terminal device is prohibited from sending the RNAU, and the second information further indicates duration in which the terminal device is prohibited from sending the TAU.

**In** other words, in this implementation, after the terminal device receives the first information, the terminal device not only knows that sending of the RNAU needs to be prohibited, but also knows the duration of prohibiting sending of the RNAU.

Similarly, in this implementation, after the terminal device receives the second information, the terminal device not only knows that sending of the TAU needs to be prohibited, but also knows the duration of prohibiting sending of the TAU.

For example, during specific implementation, the first information and/or the second information may be a timer.

With reference to the first aspect, in a possible implementation, the first information and the second information are same information.

**In** other words, in this implementation, the same information indicates to prohibit the terminal device from sending the RNAU, and also indicates to prohibit the terminal device from sending the TAU.

For example, the same information includes a correspondence between the first area information and the second area information, and the first area information indicates the first area.

According to a second aspect, this application provides a communication method, including: receiving first information and/or second information sent by a first access network device, where the first information is used for prohibiting a terminal device from sending a radio access network-based notification area update RNAU, the second information is used for prohibiting the terminal device from sending a tracking area update TAU, and the terminal device accesses a first relay node; and prohibiting sending of the RNAU and/or the TAU.

The method may be performed by the terminal device that receives the first information and/or the second information.

Specifically, in this embodiment, after the terminal device receives the first information, the terminal device is prohibited from sending the RNAU, and after the terminal device receives the second information, the terminal device is prohibited from sending the TAU.

With reference to the second aspect, in a possible implementation, the first information further indicates duration in which the terminal device is prohibited from sending the RNAU, and the second information further indicates duration in which the terminal device is prohibited from sending the TAU.

With reference to the second aspect, in a possible implementation, the first information and the second information are same information.

With reference to the second aspect, in a possible implementation, the same information includes a correspondence between first area information and second area information, the first area information indicates a first area included in an RNA and/or a registration area RA in the terminal device, the first area is an area in which the terminal device is located when the first relay node is connected to a first donor, and the second area information indicates a second area in which the terminal device is located when the first relay node is connected to a second donor.

With reference to the second aspect, in a possible implementation, when the first information and the second information are the same information, and the same information includes the correspondence between the first area information and the second area information, the prohibiting sending of the RNAU and/or the TAU includes: after determining that area information broadcast by a second access network device is included in the correspondence, prohibiting sending of the RNAU and/or the TAU, where the second access network device includes the second donor and the first relay node.

It should be understood that, for the terminal device accessing the first relay node, if the area information included in a received broadcast message is included in the correspondence between the first area information and the second area information, it may be considered that the terminal device and the first relay node are in a relatively static state. Therefore, in this implementation, when determining that the second area information is included in the correspondence, the terminal device is prohibited from sending the RNAU and/or the TAU.

With reference to the second aspect, in a possible implementation, the prohibiting sending of the RNAU and/or the TAU includes: when determining that first area information is included in a message broadcast by a second access network device, prohibiting sending of the RNAU and/or the TAU.

The second access network device includes a second donor and the first relay node, the message broadcast by the second access network device includes a correspondence between first area information and second area information, the first area information indicates a first area included in an RNA and/or an RA in the terminal device, the first area is an area in which the terminal device is located when the first relay node is connected to a first donor, and the second area information indicates a second area in which the terminal device is located when the first relay node is connected to a second donor.

In this embodiment, after a donor connected to the first relay node is switched from the first donor to the second donor, and area information corresponding to the first relay node changes from the first area information to the second area information, the message broadcast by a second base station that includes the first relay node and the second donor further includes the correspondence between the first area information and the second area information.

It should be understood that, for the terminal device accessing the first relay node, if the first area information of the terminal device is included in the correspondence broadcast by the second base station, it may be considered that the terminal device and the first relay node are in a relatively static state. Therefore, in this implementation, when determining that the first area information is included in the message broadcast by the second access network device, the terminal device is prohibited from sending the RNAU and/or the TAU.

With reference to the second aspect, in a possible implementation, after the prohibiting sending of the RNAU and/or the TAU, the method further includes: replacing the first area information in the RNA and/or the RA with the second area information.

With reference to the second aspect, in a possible implementation, the second area information includes an identifier of the terminal device and/or an identifier indicating the second area.

According to a third aspect, this application provides a communication method, including: obtaining second area information, where the second area information indicates a second area in which a terminal device is located when a first relay node is connected to a second donor, and the terminal device accesses the first relay node; and adding the second area to a radio access network-based notification area RNA and/or a registration area RA in the terminal device, where the RNA and/or the RA in the terminal device include/includes a first area, and the first area is an area in which the terminal device is located when the first relay node is connected to a first donor.

Specifically, the method is performed by the terminal device.

In this embodiment, for the terminal device accessing the first relay node, after a donor connected to the first relay node changes from the first donor to the second donor, area information corresponding to the first relay node changes from first area information to the second area information. In this embodiment, the terminal device accessing the first relay node obtains the second area information, and adds the second area indicated by the second area information to the RNA and/or the RA in the terminal device, that is, updates the RNA and/or the RA in the terminal device.

In addition, it should be noted that, in this embodiment, when the terminal device adds the second area to the RNA and/or the RA in the terminal device, the RNA and/or the RA are/is specifically an RNA and/or an RA in the terminal device.

It may be understood that, after the terminal device adds the second area indicated by the second area information to the RNA and/or the RA in the terminal device, because the RNA and/or the RA in the terminal device include/includes the second area, in this case, even if a second access network device (an access network device/a base station including the first relay node and the second donor) broadcasts the second area information, the terminal device skips initiating an RNAU and/or a TAU.

With reference to the third aspect, in a possible implementation, the method further includes: deleting the first area in the RNA and/or the RA in the terminal device.

It should be understood that, after the donor connected to the first relay node changes to the second donor, the area in which the terminal device is located changes from the first area to the second area. In other words, in this case, the first area cannot be used for reflecting an area in which the terminal device is located at a current moment. Therefore, in this implementation, in addition to adding the second area to the RNA and/or the RA in the terminal device, the terminal device further deletes the first area.

It should be noted herein that, in this embodiment, a sequence of deleting the first area in the RNA and/or the RA in the terminal device and adding the second area to the RNA and/or the RA in the terminal device is not limited.

For example, the first area in the RNA and/or the RA in the terminal device may be first deleted, and then the second area is added to the RNA and/or the RA in the terminal device. This manner may also be referred to as replacing the first area with the second area.

For example, the second area may be first added to the RNA and/or the RA in the terminal device, and then the first area in the RNA and/or the RA is deleted.

It should be noted herein that how the terminal device obtains the second area information is not limited in this embodiment.

For example, in a first possible implementation, that the terminal device obtains the second area information includes: receiving the second area information sent by a first access network device, where the first access network device includes the first donor and the first relay node.

For example, in a second possible implementation, the first access network device sends a radio resource control RRC message carrying the second area information to the terminal device.

For example, in a third possible implementation, that the terminal device obtains the second area information includes: receiving the second area information broadcast by the second access network device.

With reference to the third aspect, in a possible implementation, the second area information includes an identifier of the terminal device and/or an identifier indicating the second area.

According to a fourth aspect, this application provides a communication apparatus, including: a transceiver module, configured to send first information to a terminal device accessing a first relay node, where the first information is used for prohibiting the terminal device from sending a radio access network-based notification area update RNAU; and a processing module, configured to: determine second area information, and add a second area to a radio access network-based notification area RNA of the terminal device, where the second area information indicates the second area in which the terminal device is located when the first relay node is connected to a second donor; and the RNA of the terminal device includes a first area, and the first area is an area in which the terminal device is located when the first relay node is connected to a first donor.

With reference to the fourth aspect, in a possible implementation, the processing module is further configured to delete the first area in the RNA of the terminal device.

With reference to the fourth aspect, in a possible implementation, the second area information includes an identifier of the terminal device and/or an identifier indicating the second area.

With reference to the fourth aspect, in a possible implementation, the transceiver module is further configured to receive, through a first CU in the first donor, the second area information sent by the second donor.

With reference to the fourth aspect, in a possible implementation, the transceiver module is further configured to receive, through a first CU in the first donor, the second area information sent by a core network device.

With reference to the fourth aspect, in a possible implementation, the transceiver module is further configured to obtain, through a first CU in the first donor, information that is in the second donor and that is used for determining the second area information; and the processing module is further configured to determine the second area information based on the information that is in the second donor and that is used for determining the second area information.

With reference to the fourth aspect, in a possible implementation, the transceiver module is further configured to send second information to the terminal device accessing the first relay node, where the second information is used for prohibiting the terminal device from sending a tracking area update TAU.

With reference to the fourth aspect, in a possible implementation, the first information further indicates duration in which the terminal device is prohibited from sending the RNAU, and the second information further indicates duration in which the terminal device is prohibited from sending the TAU.

With reference to the fourth aspect, in a possible implementation, the first information and the second information are same information.

With reference to the fourth aspect, in a possible implementation, the same information includes a correspondence between first area information and the second area information, and the first area information indicates the first area.

According to a fifth aspect, this application provides a communication apparatus, including: a transceiver module, configured to receive first information and/or second information sent by a first access network device, where the first information is used for prohibiting a terminal device from sending a radio access network-based notification area update RNAU, the second information is used for prohibiting the terminal device from sending a tracking area update TAU, and the terminal device accesses a first relay node; and a processing module, configured to prohibit sending of the RNAU and/or the TAU.

With reference to the fifth aspect, in a possible implementation, the first information further indicates duration in which the terminal device is prohibited from sending the RNAU, and the second information further indicates duration in which the terminal device is prohibited from sending the TAU.

With reference to the fifth aspect, in a possible implementation, the first information and the second information are same information.

With reference to the fifth aspect, in a possible implementation, the same information includes a correspondence between first area information and second area information, the first area information indicates a first area included in an RNA and/or a registration area RA in the terminal device, the first area is an area in which the terminal device is located when the first relay node is connected to a first donor, and the second area information indicates a second area in which the terminal device is located when the first relay node is connected to a second donor.

With reference to the fifth aspect, in a possible implementation, the processing module is further configured to: after determining that area information broadcast by a second access network device is included in the correspondence, prohibit sending of the RNAU and/or the TAU, where the second access network device includes the second donor and the first relay node.

With reference to the fifth aspect, in a possible implementation, the processing module is further configured to: when determining that first area information is included in a message broadcast by a second access network device, prohibit sending of the RNAU and/or the TAU. The second access network device includes a second donor and the first relay node, the message broadcast by the second access network device includes a correspondence between first area information and second area information, the first area information indicates a first area included in an RNA and/or an RA in the terminal device, the first area is an area in which the terminal device is located when the first relay node is connected to a first donor, and the second area information indicates a second area in which the terminal device is located when the first relay node is connected to a second donor.

With reference to the fifth aspect, in a possible implementation, the processing module is further configured to replace the first area information in the RNA and/or the RA with the second area information.

With reference to the fifth aspect, in a possible implementation, the second area information includes an identifier of the terminal device and/or an identifier indicating the second area.

Optionally, in this embodiment, as a mobile device moves, after a donor connected to the first relay node is switched from the first donor to the second donor, area information in the first relay node remains unchanged.

Optionally, when the area information configured in the first relay node remains unchanged, for some terminal devices (also referred to as surrounding UEs in this embodiment) that are not in the mobile device, when the surrounding UE changes from originally accessing a subordinate cell of an original serving base station (also referred to as a third access network device in this application) to accessing a subordinate cell of the first relay node, the communication method in this application further includes: The third access network device sends an RRC release message to the surrounding UE, where the RRC release message includes an RNA; the third access network device obtains new area information; the third access network device adds a new area to the RNA of the surrounding UE; the second access network device broadcasts a new system message, where the new system message includes the new area information, first relay node indication information, and RNAU prohibition indication information, the first relay node indication information indicates that the first relay node includes the new area, and the RNAU prohibition indication information indicates to prohibit sending of the RNAU; and the surrounding UE skips initiating the RNAU based on an indication of the RNAU prohibition indication information.

**In** this embodiment, the new area information is fixed area information configured in the first relay node, and old area information is area information of the surrounding UE that is previously stored in the third access network device.

According to the communication method provided in this embodiment, after the donor connected to the first relay node is switched from the first donor to the second donor, because the third access network device adds the new area to the RNA that is configured for the surrounding UE in the third access network device, in this case, if the third access network device needs to page the surrounding UE, the third access network device may perform paging in an area indicated by the new area information, so that it can be ensured that the surrounding UE is found through paging when the surrounding UE skips sending the RNAU.

Optionally, when the area information configured in the first relay node remains unchanged, for some terminal devices (also referred to as surrounding UEs in this embodiment) that are not in the mobile device, when the surrounding UE changes from originally accessing a subordinate cell of an original serving base station (namely, a third access network device) to accessing a subordinate cell of the first relay node, the communication method in this application further includes: A core network device obtains new area information; the core network device adds a new area to an RA in the surrounding UE; the second access network device broadcasts a new system message, where the new system message includes the new area information, first relay node indication information, and TAU prohibition indication information, the first relay node indication information indicates that the first relay node includes the new area, and the TAU prohibition indication information indicates to prohibit sending of the TAU; and the surrounding UE skips initiating the TAU based on an indication of the TAU prohibition indication information.

According to the communication method provided in this embodiment, when the donor connected to the first relay node is switched from a first CU to a second CU, because the core network device adds the new area to the RA that is configured for the surrounding UE in the third access network device, in this case, if the core network device needs to page the surrounding UE, the core network device may perform paging in an area indicated by the new area information, so that it can be ensured that the core network device finds the surrounding UE through paging when the surrounding UE skips sending the TAU.

According to a sixth aspect, this application provides a communication apparatus, including: a transceiver module, configured to obtain second area information, where the second area information indicates a second area in which a terminal device is located when a first relay node is connected to a second donor, and the terminal device accesses the first relay node; and a processing module, configured to add the second area to a radio access network-based notification area RNA and/or a registration area RA in the terminal device, where the RNA and/or the RA in the terminal device include/includes a first area, and the first area is an area in which the terminal device is located when the first relay node is connected to a first donor.

With reference to the sixth aspect, in a possible implementation, the processing module is further configured to delete the first area in the RNA and/or the RA in the terminal device.

With reference to the sixth aspect, in a possible implementation, the second area information includes an identifier of the terminal device and/or an identifier indicating the second area.

With reference to the sixth aspect, in a possible implementation, the transceiver module is further configured to receive the second area information sent by a first access network device, where the first access network device includes the first donor and the first relay node.

With reference to the sixth aspect, in a possible implementation, the first access network device sends a radio resource control RRC message carrying the second area information to the terminal device.

With reference to the sixth aspect, in a possible implementation, the transceiver module is further configured to receive the second area information broadcast by a second access network device.

According to a seventh aspect, this application provides a communication system. The communication system includes the apparatus according to the fourth aspect, the apparatus according to the fifth aspect, and the communication apparatus according to the sixth aspect.

According to an eighth aspect, this application provides a communication apparatus, including a memory and a processor. The memory is configured to store program instructions. The processor is configured to invoke the program instructions in the memory to perform the method according to the first aspect, the second aspect, the third aspect, or any possible implementation of the first aspect, the second aspect, and the third aspect.

According to a ninth aspect, this application provides a computer-readable medium. The computer-readable medium stores program code for computer execution, and the program code includes instructions used for performing the method according to the first aspect, the second aspect, the third aspect, or any possible implementation of the first aspect, the second aspect, and the third aspect.

According to a tenth aspect, this application provides a computer program product. The computer program product includes computer program code, and when the computer program code is run on a computer, the computer is enabled to implement the method according to the first aspect, the second aspect, the third aspect, or any possible implementation of the first aspect, the second aspect, and the third aspect.

For technical effects brought by any implementation of the fourth aspect to the tenth aspect, refer to technical effects brought by the first aspect to the third aspect and any possible implementation of the first aspect to the third aspect. Details are not described again.

### BRIEF DESCRIPTION OF DRAWINGS

FIG. 1 is a diagram of a positioning architecture of a 5G communication system;
FIG. 2 is a diagram in which an IAB node moves with a vehicle according to an embodiment of this application;
FIG. 3 is a schematic flowchart of a communication method for ensuring that a first access network device correctly pages a terminal device when the terminal device skips initiating an RANU according to an embodiment of this application;
FIG. 4 is a diagram of an architecture in which an IAB donor connected to a first IAB node is switched from a first IAB donor to a second IAB donor according to this application;
FIG. 5 is a schematic flowchart of a communication method for ensuring that a first access network device correctly pages a terminal device when the terminal device skips initiating an RANU according to another embodiment of this application;
FIG. 6 is a schematic flowchart of a communication method for ensuring that a core network device correctly pages a terminal device when the terminal device skips initiating a TAU according to an embodiment of this application;
FIG. 7 is a schematic flowchart of a communication method for ensuring that a core network device correctly pages a terminal device when the terminal device skips initiating a TAU according to another embodiment of this application;
FIG. 8 is a schematic flowchart of a communication method in which a terminal device autonomously determines not to initiate an RNAU and/or a TAU according to an embodiment of this application;
FIG. 9 is a diagram of a structure of a communication apparatus according to an embodiment of this application;
FIG. 10 is a diagram of a structure of a communication apparatus according to another embodiment of this application;
FIG. 11 is a schematic flowchart of a communication method for ensuring that a third access network device correctly pages a terminal device when fixed area information is configured for a first relay node according to an embodiment of this application; and
FIG. 12 is a schematic flowchart of a communication method for ensuring that a core network device correctly pages a terminal device when fixed area information is configured for a first relay node according to another embodiment of this application.

### DESCRIPTION OF EMBODIMENTS

For ease of understanding, the following briefly describes terms in embodiments of this application.

### 1. TA update

When a terminal device (also referred to as a UE) registers with a network, a core network assigns a registration area (registration area, RA) to each terminal device, and the RA includes a tracking area identity (tracking area identity, TAI) list, where the TAI = a public land mobile network (public land mobile network, PLMN) + a tracking area code (tracking area code, TAC).

When the UE is in an idle state (also referred to as an RRC_IDLE state), the core network needs to deliver a paging message (5GC paging) to all cells in all TAs in the TAI list, to find the UE for a network side. This is also referred to as core network-level UE tracking.

When the UE moves to a cell that does not belong to the TAI list, that is, when the cell in which the UE is located is not in an area included in the RA, the UE actively initiates a tracking area update TAU. Then, after receiving the TAU, a core network device registers a location of the UE and updates the RA in the UE, to reassign, to the UE, a TAI list that includes a TA to which the cell in which the UE is currently located belongs.

### 2. Radio access network-based notification area

To reduce network signaling load and reduce a delay of the UE resuming to a connected state (also referred to as an RRC_CONNECTED state), an inactive state (also referred to as an RRC_INACTIVE state) is introduced in a 5th generation mobile communication network.

A context of the UE is stored in both a UE in the RRC_INACTIVE state and an access network device, and a connection between the access network device and a core network device is also retained. Therefore, the UE can quickly resume from the RRC_INACTIVE state to the RRC_CONNECTED state.

The access network device may find, by using a radio access network (radio access network, RAN) through paging, a UE in the RRC_INACTIVE state that is located in a specific radio access network-based notification area (ran-based notification area, RNA). The RNA is a reachability management area that is configured and managed by the RAN and that is for the UE in the RRC_INACTIVE state. Specifically, configuration may be performed based on the following two forms:
(1) a cell list including one or more cells; and
(2) including one or more RAN area identities (identities, IDs), where one RAN area is a subset of a TA or is equal to a TA, and the RAN area ID includes one TAC and one or more optional radio access network area codes (ran area codes, RACs), that is, a RAN area ID = a TAC + an RAC list.

An access network device that last serves the UE (also referred to as a last serving gNB) may configure the RNA for the UE by using a radio resource control (radio resource control, RRC) release message (also referred to as an RRC release message). Then, the context of the UE in the RRC_INACTIVE state, an NG connection between the access network device and a serving access and mobility management function (access and mobility management function, AMF), and an NG connection between the access network device and a serving user plane function (user equipment, UPF) are retained.

Generally, the RAN is unaware of movement of the UE in the RRC_INACTIVE state within the RNA. In this case, if the last serving gNB receives downlink data from the UPF or downlink UE-related signaling (except a UE context release command message) from the AMF, the last serving gNB performs paging in a cell corresponding to the RNA. In addition, if the RNA includes a cell of a neighboring access network device, XnAP RAN paging may be sent to the neighboring access network device. When the UE in the RRC_INACTIVE state moves out of the configured RNA, a radio access network-based notification area update (ran-based notification area update, RNAU) procedure needs to be initiated. When receiving an RNAU from the UE, a new access network device that serves the UE (also referred to as a new serving gNB) triggers an XnAP retrieve UE context procedure, obtains the context of the UE from the last serving gNB, and may determine to return the UE to the RRC_INACTIVE/RRC_IDLE state, or switch the UE to the RRC_CONNECTED state.

With development of communication technologies, a relay networking technology is widely used and developed. The following describes a communication method and a communication apparatus provided in this application by using an IAB architecture that is very widely used in a relay networking architecture as an example.

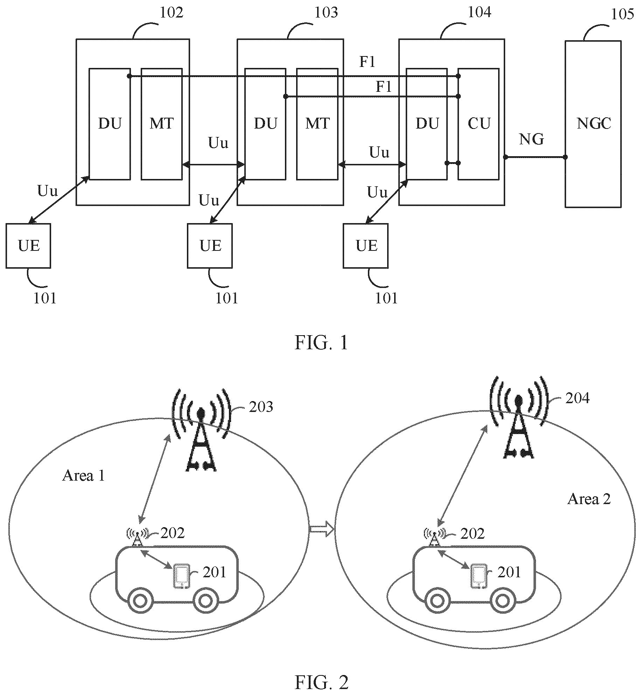

For example, FIG. 1 is a diagram of an IAB architecture. As shown in FIG. 1, the IAB architecture includes a user equipment (user equipment, UE) 101, an IAB node 102, an IAB node 103, an IAB donor 104, and a core network 105. The IAB donor 104 is directly connected to the core network 105, the IAB donor 104 is connected to the IAB node 103, the IAB node 103 is connected to the IAB node 102, and the IAB node 102 is connected to the user equipment 101. A physical interface between the user equipment 101 and the IAB node 102 is a Uu interface, and a physical interface between the IAB donor 104 and the core network 105 is an NG interface.

As shown in FIG. 1, the user equipment 101 may access the IAB node 102 through the Uu interface, and after the terminal device 101 accesses the IAB node 102, service data of the user equipment 101 may be transmitted, through the IAB node 103 connected to the IAB node 102, to the IAB donor 104 connected to the IAB node 103, and then transmitted to the core network through the NG interface between the IAB donor 104 and the core network 105.

It should be understood that names of a physical interface between the IAB node 102 and the IAB node 103 and a physical interface between the IAB node 103 and the IAB donor 104 are not specifically limited in this embodiment of this application.

It should be understood that, in this embodiment of this application, the IAB donor 104 may be connected to a plurality of IAB nodes, and each IAB node may be further connected to another IAB node or user equipment. For example, FIG. 1 shows only one IAB node 103 connected to the IAB donor 104, only one IAB node 102 connected to the IAB node 103, and only one user equipment 101 connected to the IAB node 102, but this does not constitute a limitation on this embodiment of this application.

In this embodiment of this application, the IAB donor and the IAB node may be devices configured to communicate with a mobile station, and may be specifically any one of the following: an access point (access point, AP) in a wireless local area network (wireless local Area network, WLAN), a base transceiver station (base transceiver station, BTS) in a global system for mobile communications (global system for mobile communications, GSM) or code division multiple access (code division multiple access, CDMA), a NodeB (NodeB, NB) in wideband code division multiple access (wideband code division multiple access, WCDMA), an evolved NodeB (evolved NodeB, eNB) in an LTE system, a relay station or an access point, a vehicle-mounted device, a wearable device, an access network device in a future 5G network, an access network device in a future evolved public land mobile network (public land mobile network, PLMN), and the like.

The user equipment may also be referred to as a UE, a mobile station, an access terminal, a subscriber unit, a subscriber station, a mobile station, a remote station, a remote terminal, a mobile device, a terminal, a terminal device, a wireless communication device, a user agent, a user apparatus, or the like, and may be specifically any one of the following: a station (station, ST) in a WLAN, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a mobile station in a future 5G network, a terminal device in a future evolved PLMN network, and the like.

Specifically, in the IAB architecture, each IAB node is configured to provide an access and backhaul service for a child node or a UE.

Specifically, each IAB node needs to maintain a wireless link oriented to a parent node, and further needs to maintain a wireless link with the child node. If the child node of the IAB node is a terminal device, the wireless link between the IAB node and the child node (namely, the terminal device) is referred to as a wireless access link; or if the child node of the IAB node is another IAB node, a wireless link between the IAB node and the child node (namely, the another IAB node) is referred to as a wireless backhaul link.

FIG. 1 is used as an example. The terminal device 101 accesses the IAB node 102 through a wireless access link, the IAB node 102 is connected to the IAB node 103 through a wireless backhaul link, and the IAB node 103 is connected to the IAB donor through a wireless backhaul link.

It should be noted herein that, in this embodiment of this application, an IAB node accessed by the terminal device is also referred to as an access IAB node, and an IAB node that is other than the access IAB node and that is configured to provide a backhaul service is also referred to as an intermediate IAB node.

FIG. 1 is used as an example. The IAB node 102 is an access IAB node, and the IAB node 103 is an intermediate IAB node. However, it should be understood that an IAB node is an access IAB node for a terminal that accesses the IAB node, and is an intermediate IAB node for a terminal that accesses another IAB node. Therefore, whether an IAB node is specifically an access IAB node or an intermediate IAB node is not fixed and needs to be determined based on a specific application scenario.

More specifically, as shown in FIG. 1, each IAB node includes a mobile terminal (mobile termination, MT) part and a distributed unit (distributed unit, DU) part. When being oriented to the parent node of the IAB node, the IAB node may serve as a terminal device, that is, a role of an MT. When being oriented to the child node (the child node may be another IAB node or a UE) of the IAB node, the IAB node is considered as a network device, that is, a role of a DU.

FIG. 1 is used as an example. When the IAB node 102 is oriented to a parent node (namely, the IAB node 103) of the IAB node 102, the IAB node 102 is considered as a terminal device, that is, a role of an MT. When the IAB node 102 is oriented to a child node (namely, the terminal device 101) of the IAB node 102, the IAB node 102 is considered as a network device, that is, a role of a DU. Similarly, when the IAB node 103 is oriented to a parent node (namely, the IAB donor 104) of the IAB node 103, the IAB node 103 is considered as a terminal device, that is, a role of an MT. When the IAB node 103 is oriented to a child node (namely, the IAB node 102) of the IAB node 103, the IAB node 103 is considered as a network device, that is, a role of a DU.

In other words, for a DU in the IAB donor 104, the MT in the IAB node 103 is considered as a UE, and for the MT in the IAB node 103, the DU in the IAB donor 104 is considered as a network device. Similarly, for the DU in the IAB node 103, the MT in the IAB node 102 is considered as a UE, and for the MT in the IAB node 102, the DU in the IAB node 103 is considered as a network device. Similarly, for the terminal device 101, a DU in an IAB node 102 is considered as a network device.

Specifically, in this application, the IAB donor 104 may be an access network element having a complete base station function, or may be an access network element in a form in which a central unit (central unit, CU) is split from a distributed unit (distributed unit, DU). In this application, the central unit in the IAB donor is also referred to as a donor-CU (or directly referred to as a CU) for short, and the distributed unit in the IAB donor is referred to as a donor-DU for short. The donor-CU may alternatively be in a form in which a control plane (control plane, CP) is split from a user plane (user plane, UP). For example, the CU may include one CU-CP and one or more CU-UPs.

As shown in FIG. 1, a DU part of each IAB node is connected to the IAB donor through an F1 interface. In addition, an MT in each IAB node may be connected to the donor-CU through an air interface.

Specifically, the F1 interface includes two parts: a control plane and a user plane. The user plane part is maintained between a DU part of the IAB node and the donor-CU-UP, and the control plane part is maintained between the DU of the IAB node and the donor-CU-CP.

Specifically, in this application, the core network 105 is mainly configured to perform authentication, mobility management, PDU session management, and the like on the terminal device. It should be noted herein that a specific form of the core network 105 is not limited in this application. For example, the core network 105 may be a core network in a 5th generation (5th generation, 5G) mobile communication system, a core network in a 4G mobile communication system, a core network in a 6G mobile communication system, a core network in a future communication system, or the like.

More specifically, the core network 105 mainly includes a user plane function (user equipment, UPF) and a control plane function of a data plane. The user plane function is mainly responsible for packet data packet forwarding, quality of service (quality of service, QoS) control, charging information collection, connection to an external network, and the like, and includes related functions of a serving gateway (serving gateway, SGW) and a public data network gateway (public data network gateway, PDN-GW) in a long term evolution (long term evolution, LTE) technology. The control plane function is mainly responsible for service procedure interaction, and delivering a data packet forwarding policy, a QoS control policy, and the like to a user plane. For example, network elements in the control plane function mainly include a mobility management function (access and mobility function, AMF), a session management function (session management function, SMF), a policy control function (policy control function, PCF), an application function (application function, AF), a network exposure function (network exposure function, NEF), and the like.

The AMF network element is connected to an access network device through an NG interface, and may manage access of the terminal device to the core network, for example, access control of the terminal device, mobility management of the terminal device, attachment and detachment of the terminal device, triggering an LMF network element to position the terminal device, forwarding a positioning-related message between the terminal device and the LMF network element, and forwarding a positioning-related message between the access network device and the LMF network element. The LMF network element may position the terminal device based on a positioning request of the AMF network element. Specifically, when positioning the terminal device, the LMF network element may determine a positioning method used for the terminal device and a network device for positioning the terminal device. It should be understood that a function of the LMF network element herein may also be referred to as a function of an LMF. In other words, the LMF network element is configured to implement the function of the LMF. The SMF network element is mainly responsible for managing creation, deletion, and the like of a user protocol data unit (protocol data unit, PDU) session, and maintaining a PDU session context and user plane forwarding pipeline information. The PCF is mainly responsible for executing policy control, and is similar to a policy and charging rules function (policy and charging rules function, PCRF) network element in the long term evolution (long term evolution, LTE) technology, including generating and managing a user, a session, a quality of service (quality of service, QoS) flow processing policy, and quality of service, generating a charging rule, and delivering a corresponding rule to the UPF network element via the SMF. The AF network element is mainly responsible for providing functions of various services, can interact with the core network via the NEF network element, and can interact with a policy management framework to perform policy management. The NEF is configured to: provide a framework, authentication, and an interface that are related to network capability exposure, and transfer information between a network function of a 5G system and another network function. For more detailed descriptions of the network elements in the control plane function, refer to descriptions in a related technology. Details are not described herein again.

Generally, for the IAB architecture shown in FIG. 1, the access IAB node (namely, the IAB node 102 in FIG. 1) in the IAB architecture may be deployed on a mobile device (for example, a vehicle) and move with the mobile device. It may be understood that, in a moving process of the mobile device, the IAB donor connected to the access IAB node may be switched.

For example, FIG. 2 is a diagram in which an IAB node moves with a vehicle according to an embodiment of this application. As shown in FIG. 2, an IAB node 202 is deployed on a vehicle and moves with the vehicle, and a terminal device located in the vehicle may access the IAB node 202. As shown in FIG. 2, when the vehicle is in an area 1, the IAB node 202 is connected to an IAB donor 203; and when the vehicle moves to an area 2, the IAB node 202 is connected to an IAB donor 204. In other words, the IAB donor connected to the access IAB node 202 is switched.

In a CU-DU split architecture, an operation, administration, and maintenance (operation, administration, and maintenance, OAM) device preconfigures, for a DU based on CU information of an F1 interface to be established by the DU, area information of each cell (also referred to as a subordinate cell in this application) included in the DU. Then, when the DU establishes the F1 interface with a corresponding CU, the DU reports the area information of each subordinate cell to the CU, and the CU feeds back a cell identifier such as an NCGI to the DU, to indicate the DU to activate a corresponding cell. In this application, the area information of each cell may include, for example, the NCGI/a TAC/an RAC.

Therefore, it may be understood that, in a scenario in which the access IAB node is deployed on the vehicle and moves with the vehicle, if the IAB donor connected to the access IAB node is switched, according to implementation logic of a current protocol, the area information of each subordinate cell in the access IAB node is updated based on information about a new IAB donor (or a CU included in the new IAB donor). For example, TAC information of each subordinate cell is updated based on the information about the new IAB donor (or the CU included in the new IAB donor), RAC information of each subordinate cell is updated based on the information about the new IAB donor (or the CU included in the new IAB donor), or NCGI information of each cell is updated based on the information about the new IAB donor (or the CU included in the new IAB donor).

That the area information of each subordinate cell in the access IAB node is updated based on information about a new IAB donor (or a CU included in the new IAB donor) may also be understood as that the access IAB node needs to update, based on the information about the new connected IAB donor (or the central unit (central unit, CU) included in the new connected IAB donor), the area information corresponding to the subordinate cell in the access IAB node, or may be understood as that the access IAB node needs to update, based on area information of an area to which the access IAB node moves, the area information corresponding to the subordinate cell in the access IAB node.

It should be understood that, after the area information of each subordinate cell in the access IAB node is updated based on the information about the new IAB donor (or the CU included in the new IAB donor), for a terminal device accessing the access IAB node, there may be a problem that an area indicated by area information broadcast by a cell in which the terminal device is located is not in an RNA and/or an RA in the terminal device. As a result, the terminal device initiates an update request.

It should be emphasized that, for a network side, "an area indicated by area information broadcast by a cell in which the terminal device is located is not in an RNA and/or an RA in the terminal device" herein may be understood as that the area indicated by the area information broadcast by the cell in which the terminal device is located is in an RNA and/or an RA in a network device, but not in the RNA and/or the RA in the terminal device.

The update request is used for requesting the network side to update the RNA and/or the RA, to ensure that the terminal device can be found through paging.

Specifically, when an access network device pages the terminal device, if the area indicated by the area information (NCGI/TAC/RAC) broadcast by the cell in which the terminal device is located is not in the RNA of the terminal device, the terminal device initiates an RNAU (also referred to as an RNAU request in this application). The RNAU request is used for requesting the access network device to update the RNA, to ensure that an access network side can find the terminal device through paging.

It should be noted herein that, in this application, initiating the RNAU may also be referred to as sending the RNAU, and correspondingly, prohibiting sending of the RNAU is also referred to as prohibiting initiation of the RNAU.

Specifically, when a core network device pages the terminal device, if the area indicated by the area information (TAC) broadcast by the cell in which the terminal device is located is not in the RA in the terminal device, the terminal device initiates a TAU (also referred to as a TAU request in this application). The TAU request is used for requesting a core network side to update the RA, to ensure that the core network side can find the terminal device through paging.

It should be noted herein that, in this application, initiating the TAU may also be referred to as sending the TAU, and correspondingly, prohibiting sending of the TAU is also referred to as prohibiting initiation of the TAU.

In addition, because the vehicle may always move, the access IAB node may be switched to different IAB donors for a large quantity of times. In this way, the area information in the access IAB node is updated for a large quantity of times. Further, consequently, the terminal device initiates the RNAU or the TAU for a very large quantity of times. This not only increases network implementation complexity and signaling overheads, but also causes unnecessary power consumption of the terminal device.

In view of this, this application provides a communication method and a communication apparatus, so that after the IAB donor connected to the access IAB node is switched, when the terminal device in the IAB node skips initiating the RNAU request or the TAU request, the network side can correctly find the terminal device through paging.

In addition, it should be noted that, in the scenario in which the access IAB node is deployed on the mobile device (for example, the vehicle) and moves with the mobile device, fixed area information may alternatively be configured for the access IAB node. In other words, the area information configured for the access IAB node remains unchanged and is not updated due to the movement of the mobile device.

It may be understood that, in this case, after the access IAB node moves from the area 1 to the area 2, and the donor connected to the access IAB node is switched from an original IAB donor to a new IAB donor, for some terminal devices (also referred to as surrounding UEs in this embodiment) that are in the area 2 but are not in the mobile device, the following case may further occur: The surrounding UE changes from accessing a subordinate cell of an original serving base station to accessing a subordinate cell of the access IAB node.

In this way, for the surrounding UE, there may also be a problem that an area indicated by area information broadcast by a cell in which the surrounding UE is located is not in an RNA and/or an RA in the surrounding UE. As a result, the surrounding UE initiates an update request.

It should be noted that, in this application, that the donor connected to the access IAB node is switched from an original IAB donor to a new IAB donor may be replaced with that the donor connected to the access IAB node is migrated from the original IAB donor to the new IAB donor.

Similarly, it should be emphasized that, for the network side, "an area indicated by area information broadcast by a cell in which the surrounding UE is located is not in an RNA and/or an RA in the surrounding UE" herein may be understood as that the area indicated by the area information broadcast by the cell in which the surrounding UE is located is in the RNA and/or the RA in the network device, but not in the RNA and/or the RA in the surrounding UE.

Similarly, the update request is used for requesting the network side to update the RNA and/or the RA, to ensure that the surrounding UE can be found through paging.

Specifically, when the fixed area information is configured for the access IAB node:

When the access network device pages the surrounding UE, if the area indicated by the area information (NCGI/TAC/RAC) broadcast by the cell in which the surrounding UE is located is not in the RNA of the surrounding UE, the surrounding UE initiates an RNAU (also referred to as an RNAU request in this application). The RNAU request is used for requesting the access network device to update the RNA, to ensure that the access network side can find the surrounding UE through paging.

When the core network device pages the surrounding UE, if the area indicated by the area information (TAC) broadcast by the cell in which the surrounding UE is located is not in the RA in the surrounding UE, the surrounding UE initiates a TAU (also referred to as a TAU request in this application). The TAU request is used for requesting the core network side to update the RA, to ensure that the core network side can find the surrounding UE through paging.

In addition, because the mobile device may always move, the surrounding UE initiates the RNAU or the TAU for a very large quantity of times. This not only increases network implementation complexity and signaling overheads, but also causes unnecessary power consumption of the surrounding UE.

In view of this, this application further provides a communication method and a communication apparatus, so that after the IAB donor connected to the access IAB node is switched, and when the area information configured for the IAB node is the fixed area information, the network side can correctly find the terminal device through paging when the surrounding UE accessing the IAB node skips initiating the RNAU request or the TAU request.

In addition, before the solutions provided in this application are described, it should be emphasized that the IAB architecture shown in FIG. 1 is merely a specific example of the relay networking architecture. During specific implementation of the communication method provided in this application, the IAB architecture may also be extended to another type of relay networking architecture. In this case, the IAB node in FIG. 1 is also referred to as a relay node, and the IAB donor or an IAB donor base station is also referred to as a donor or a donor base station. This is not specifically limited in embodiments of this application. In addition, before the technical solutions provided in this application are described, it should be further emphasized that in this application, only an example in which the area information of each subordinate cell in the access IAB node is updated based on the information about the new IAB donor (or the CU included in the new IAB donor) is used for describing the technical solutions of this application. However, it should be understood that a concept provided in the technical solutions of this application may also be applied to a scenario in which area information of each subordinate cell in another IAB node is updated based on information about a new IAB donor (or a CU included in the new IAB donor). This does not constitute a limitation on this application.

The following describes the communication method provided in this application.

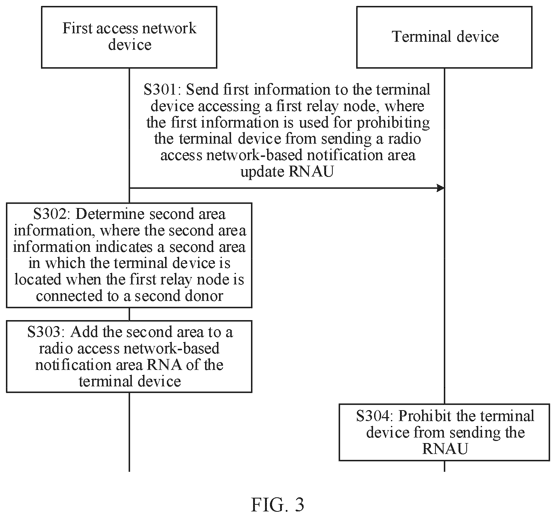

FIG. 3 is a schematic flowchart of a communication method according to an embodiment of this application. Specifically, the method in FIG. 3 is a schematic flowchart of a communication method for ensuring that a first access network device correctly pages a terminal device when the terminal device skips initiating an RANU.

As shown in FIG. 3, the method may include S301, S302, S303, and S304.

It should be noted that, in this embodiment, sending of first information in S301, S302, and S303 may be performed by the first access network device, and receiving of the first information in S301 and S304 may be performed by the terminal device. For detailed descriptions of the first access network device, refer to the following descriptions in this embodiment. Details are not described herein.

S301: The first access network device sends the first information to the terminal device accessing a first relay node. Correspondingly, the terminal device accessing the first relay node receives the first information, where the first information is used for prohibiting the terminal device from sending a radio access network-based notification area update RNAU.

For example, the first relay node in this embodiment may be an IAB node (also referred to as a first IAB node).

In this embodiment, the first relay node is deployed on a mobile device, and may move with the mobile device. In addition, the first relay node may provide an access function for a terminal device located in the mobile device, to implement communication between the terminal device in the mobile device and a network side.

It should be noted herein that a specific form of the mobile device is not limited in this embodiment. For example, the mobile device is a vehicle, a robot, an elevator, or the like.

It may be understood that, when the mobile device moves from one geographical area to another geographical area, a donor connected to the first relay node in the mobile device may change.

In this embodiment, a donor connected to the first relay node when the mobile device is in a first geographic area is referred to as a first donor, where the first donor includes a CU and a DU. In this application, the first donor is also referred to as a source donor or a source donor base station, the CU in the first donor is also referred to as a first CU, and the DU in the first donor is also referred to as a first DU.

In this embodiment, a donor newly connected to the first relay node when the mobile device moves from the first geographic area to a second geographic area is referred to as a second donor, where the second donor also includes a CU and a DU. In this application, the second donor is also referred to as a new donor or a new donor base station, the CU in the second donor is also referred to as a second CU, and the DU in the second donor is also referred to as a second DU.

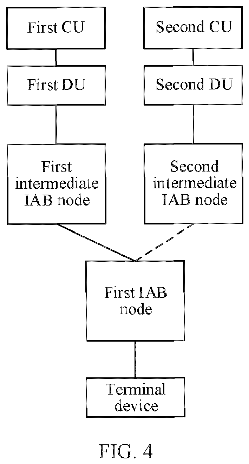

For example, an example in which the first relay node is a first IAB node is used for describing a diagram of an architecture in which a donor connected to the first IAB node is switched from a first donor to a second donor. As shown in FIG. 4, the architecture includes the first donor including a first CU and a first DU, the second donor including a second CU and a second DU, a first intermediate IAB node, and a second intermediate IAB node. A terminal device may access a network side through the first IAB node. Specifically, when the terminal device may be connected to the first donor through the first IAB node and the first IAB intermediate node, the terminal device may be connected to the second donor through the first IAB node and the second IAB intermediate node.

In this embodiment, a base station formed when the first relay node is connected to the first donor is referred to as a first access network device, and a base station formed when the first relay node is connected to the second donor is referred to as a second access network device.

In this embodiment, the first access network device may send the first information to the terminal device accessing the first relay node. Correspondingly, the terminal device accessing the first relay node may receive the first information.

The first information is used for prohibiting the terminal device from sending the RNAU. In other words, it may be said that the first information has a function of prohibiting the terminal device from sending the RNAU.

In other words, in this embodiment, after the terminal device receives the first information, the terminal device no longer sends the RNAU.

It should be noted herein that a specific form of the first information is not limited in this embodiment.

For example, in a first implementation, a Boolean value may indicate the terminal device to disable/enable a function of initiating the RNAU. For example, a bit 0 indicates the function of initiating the RNAU by the terminal device, and a bit 1 (namely, the first information) indicates a function of skipping initiating the RNAU by the terminal device. For another example, the bit 0 (namely, the first information) indicates the function of skipping initiating the RNAU by the terminal device, and the bit 1 indicates the function of initiating the RNAU by the terminal device.

For example, in a second implementation, the first information may indicate, by setting a timer (timer), the terminal device to disable the function of initiating the RNAU. For example, the first information is a disable RNAU timer. It may be understood that, in the second implementation, after receiving the timer, the terminal device not only knows that the function of initiating the RNAU needs to be disabled, but also knows specific execution duration. In other words, in this manner, the first information may further indicate duration in which the terminal device skips initiating the RNAU.

For example, in a third implementation, the first information may alternatively be in a form of a Boolean value + a timer.

It should be understood that, in the foregoing three implementations, dedicated information directly indicates to prohibit the terminal device from sending the RNAU. Therefore, in this application, it is also considered that the first access network device explicitly indicates to prohibit the terminal device from sending the RNAU.

It should be noted herein that how the first access network device sends the first information to the terminal device is not limited in this embodiment.

For example, in an implementation solution, the first information may be carried in a radio resource control (radio resource control, RRC) release message (also referred to as an RRCRelease message) and sent to the terminal device together with an RNA.

S302: The first access network device determines second area information, where the second area information indicates a second area in which the terminal device is located when the first relay node is connected to the second donor.

In this embodiment, in a scenario in which the first relay node is deployed on the mobile device and moves with the mobile device, when the first relay node is connected to the first donor, area information of each cell (also referred to as a subordinate cell) included in the first relay node is obtained based on information about the first donor (or the first CU included in the first donor). In this embodiment, when the first relay node is connected to the first donor, the area information corresponding to each cell is referred to as first area information.

Specifically, the area information of each cell in this embodiment may include one or more of the following: an NCGI/a TAC/an RAC.

It should be understood that the pieces of area information are some area information that may need to be used when the access network device pages the terminal device. If the pieces of area information NCGI/TAC/RAC are different, areas (also referred to as paging areas in this application) used by the access network device to page the terminal device are different.

When the donor connected to the first relay node is switched from the first donor to the second donor (that is, switched from the source donor base station to the new donor base station), according to implementation logic of a current protocol, the area information of each subordinate cell in the first relay node is updated based on information about the second donor (or the second CU included in the second donor). For example, TAC information of each subordinate cell is updated based on the information about the second donor (or the second CU included in the second donor)/RAC information of each subordinate cell is updated based on the information about the second donor (or the second CU included in the second donor)/NCGI information of each cell is updated based on the information about the second donor (or the second CU included in the second donor).

In other words, when the donor connected to the first relay node changes from the first donor to the second donor, the area information corresponding to each cell included in the first relay node changes from the first area information to the second area information. In other words, when the first relay node is connected to the first donor, the area information corresponding to each cell in the first relay node is the first area information; and when the first relay node is connected to the second donor, the area information corresponding to each cell in the first relay node is the second area information.

It should be understood that, in this embodiment, the first area information may indicate an area (also referred to as a first area/an old area in this application) in which the terminal device accessing the first relay node is located when the first relay node is connected to the first donor; and the second area information may indicate an area (also referred to as the second area/a new area in this application) in which the terminal device accessing the first relay node is located when the donor connected to the first relay node changes from the first donor to the second donor.

It may be understood that, in a conventional technology, after the area information of each cell in the first relay node is updated, for the terminal device in the first relay node, an area indicated by area information broadcast by a cell in which the terminal device is located may not be in an RNA of the terminal device. As a result, the terminal device initiates the RNAU to a network side device, where the RNAU is used for requesting the network side to update the RNA, so that the network side can correctly find the terminal device through paging.

However, it should be understood that, in the scenario in which the first relay node is deployed on the mobile device and moves with the mobile device, the terminal device and the first relay node may be considered to be in a relatively static state. In this way, for the terminal device in the first relay node, regardless of how the area information of the cell in which the terminal device is located changes, the area indicated by the area information of the cell is an area in which the terminal device is located. In other words, if the network side needs to correctly find the terminal device through paging, the network side can find the terminal device through paging provided that the network side performs paging in the area indicated by the area information of the cell.

In view of this, in this embodiment, the first access network device obtains the second area information corresponding to the first relay node when the first relay node is connected to the second donor, and then adds the second area information to the RNA that is configured for the terminal device in the first access network device, that is, updates the RNA that is configured for the terminal device in the first access network device.

It should be noted herein that a manner in which the first access network device obtains the second area information is not limited in this embodiment.

For example, in a first implementation solution, the first access network device may receive, through the first CU in the first donor, the second area information sent by the second donor. In other words, the second CU in the second donor sends the second area information to the first CU in the first donor. Correspondingly, the first CU in the first donor receives the second area information sent by the second CU.

For example, in a second implementation solution, a core network device first determines the second area information, and then sends the second area information to the first access network device. Correspondingly, the first access network device receives, through the first CU in the first donor, the second area information sent by the core network device.

For example, in a third implementation solution, the first access network device obtains, through the first CU in the first donor, information that is in the second donor and that is used for determining the second area information, and then determines the second area information based on the information that is in the second donor and that is used for determining the second area information.

In this embodiment, the second area information includes an identifier of the terminal device and/or an identifier indicating the second area.

It should be understood that, when the second area information includes the identifier of the terminal device and the identifier indicating the second area, the first access network device may update an RNA of a single terminal device in an inactive state; and when the second information includes only the identifier of the second area, the first access network device may update RNAs of a plurality of terminal devices in the inactive state.

Optionally, in this embodiment, after obtaining the second area information, the first access network device may further send a correspondence between the first area information and the second area information to the terminal device. Correspondingly, after receiving the correspondence between the first area information and the second area information, the terminal device is prohibited from sending the wireless RNAU.

In other words, in this implementation, the correspondence between the first area information and the second area information is used as the first information used for prohibiting the terminal device from sending the RNAU. It should be understood that, in this implementation, the first access network device skips directly indicating to prohibit the terminal device from sending the RNAU. Therefore, in this application, it is also considered that the first access network device implicitly indicates to prohibit the terminal device from sending the RNAU.

S303: The first access network device adds the second area to the radio access network-based notification area RNA of the terminal device.

In this embodiment, after obtaining the second area information corresponding to the first relay node when the first relay node is connected to the second donor, the first access network device adds the second area indicated by the second area information to the RNA that is configured for the terminal device in the first access network device, that is, updates the RNA that is configured for the terminal device in the first access network device.

It should be noted herein that an implementation in which the first access network device adds the second area to the RNA that is configured for the terminal device in the first access network device is not limited in this embodiment.

For example, in a first implementation solution, after the second area corresponding to the terminal device is determined, the second area is directly added to the RNA that is configured for the terminal device in the first access network device.

For example, in a second implementation solution, the first area in the RNA that is configured for the terminal device in the first access network device may be deleted, and the second area may be added to the RNA that is configured for the terminal device in the first access network device.

In the second implementation solution, a sequence of deleting, by the first access network device, the first area in the RNA that is configured for the terminal device in the first access network device and adding, by the first access network device, the second area to the RNA that is for the terminal device in the first access network device is not limited in this embodiment.

For example, the first area in the RNA that is configured for the terminal device in the first access network device may be first deleted, and then the second area is added to the RNA. This manner may also be referred to as replacing the first area with the second area.

For example, the second area may be first added to the RNA that is configured for the terminal device in the first access network device, and then the first area in the RNA is deleted.

S304: Prohibit the terminal device from sending the RNAU.

In this embodiment, after receiving the first information, the terminal device is prohibited from sending the RNAU.

It should be understood that, in this embodiment, when the first access network device adds the second area to the RNA of the terminal device, if the first access network device needs to page the terminal device, the first access network device also performs paging in all cells included in the second area; and in addition, because the second area is the area in which the terminal device is located, even if the terminal device skips sending the RNAU to the access network device, it can be ensured that the first access network device finds the terminal device through paging.

In other words, according to the communication method provided in this application, after the donor connected to the first relay node is switched, the first access network device can correctly find the terminal device through paging while the terminal device accessing the first relay node skips initiating the RNAU. This not only reduces signaling overheads, but also reduces power consumption of the terminal device.

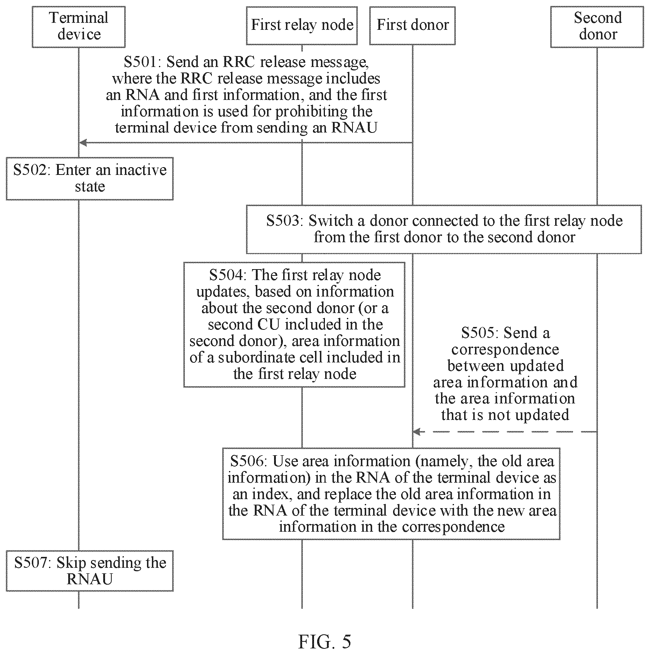

The foregoing describes, with reference to the embodiment shown in FIG. 3, how to ensure that the first access network device can correctly find the terminal device through paging when the terminal device skips initiating the RANU. For ease of understanding, a more specific embodiment is described below with reference to FIG. 5, to describe a specific implementation in which it can also be ensured that the first access network device can correctly find the terminal device through paging when the terminal device skips initiating the RANU.

As shown in FIG. 5, the method may include S501, S502, S503, S504, S505, and S506.

S501: A first access network device sends an RRC release message to a terminal device, where the RRC release message includes an RNA and first information, and the first information is used for prohibiting the terminal device from sending an RNAU.

In this embodiment, the first access network device is specifically a base station/an access network device including a first relay node and a first donor. The first relay node is deployed on a mobile device (for example, a vehicle) and moves with the mobile device.

For detailed descriptions of the first information, refer to the descriptions in the embodiment shown in FIG. 3. Details are not described herein again.

In this embodiment, when the RRC release message (also referred to as RRCRelease) received by the terminal device includes a "suspend" ("suspend") indication, the terminal device further performs S502: The terminal device enters an inactive state.

Optionally, the first information in this embodiment may alternatively be provided for the terminal device in a broadcast manner. For example, in this manner, the first access network device in this embodiment provides the RNA for the terminal device by using the RRC release message, and provides the first information for the terminal device in the broadcast manner.

Specifically, the first access network device may autonomously determine whether to provide the first information for the terminal device in the broadcast manner. For example, in an implementation, the first access network device may perform determining based on other conditions such as a quantity of terminal devices (also referred to as on-board UEs) that are relatively static with the mobile device and the first access node.

For example, if the quantity of on-board UEs that are relatively static with the mobile device and the first access node reaches a threshold, the first access network device determines to provide the first information for the terminal device in the broadcast manner. For example, in this manner, less impact may be caused on another terminal device. For example, it is assumed that there are 100 terminal devices accessing the first access node. If there is only one on-board UE that is relatively static with the mobile device and the first access node, and all other UEs are terminal devices (also referred to as surrounding UEs) that access the first relay node but are not in the mobile device, broadcasting the first information affects all the other 99 surrounding UEs. This is not appropriate. However, if there are 55 on-board UEs that are relatively static with the mobile device and the first access node, and remaining 45 UEs are surrounding UEs, it may be appropriate to broadcast the first information.

S503: As the mobile device moves, switch a donor connected to the first relay node from the first donor to a second donor.

Specifically, the first donor includes a CU and a DU, and the second donor also includes a CU and a DU. In this embodiment, the CU included in the first donor is referred to as a first CU, and the CU included in the second donor is referred to as a second CU.

S504: The first relay node updates, based on information about the second donor (or the second CU included in the second donor), area information of a subordinate cell included in the first relay node.

For example, area information of each subordinate cell is, for example, at least one of the following: an NCGI, a TAC, an RAC, and the like. For detailed descriptions of the NCGI, the TAC, and the RAC, refer to the descriptions of the foregoing related parts in this application. Details are not described herein again.

S505: The second donor sends, to the first donor, a correspondence between updated area information and the area information that is not updated.

For example, when the first relay node is connected to the first donor, area information of a cell in which the terminal device is located is an NCGI #1/a TAC #1/an RAC #1. After the first relay node is switched to the second donor, the area information of the cell in which the terminal device is located is an NCGI #2/a TAC #2/an RAC #2, and in this case, the correspondence between the updated area information and the area information that is not updated that correspond to the terminal device is as follows: The NCGI #1 corresponds to the NCGI #2, the TAC #1 corresponds to the TAC #2, and the RAC #1 corresponds to the RAC #2; or the correspondence between the updated area information and the area information that is not updated that correspond to the terminal device is as follows: The NCGI #2 corresponds to the NCGI #1, the TAC #2 corresponds to the TAC #1, and the RAC #2 corresponds to the RAC #1.

In this embodiment, the updated area information (also referred to as new area information) may be considered as the second area information in the embodiment shown in FIG. 3, and the area information that is not updated may be considered as the first area information in the embodiment shown in FIG. 3.

Specifically, during implementation, the second donor may send, to the first CU in the first donor, the correspondence between the updated area information and the area information that is not updated through the second CU, so that the first donor learns of the correspondence. In this way, the first access network device can learn of the correspondence. It may be understood that, in this step, after the second donor sends the correspondence to the first donor, in addition to obtaining the second area information, the first access network device may further know that the terminal device accessing the first relay node is located in a second area indicated by the second area information, and is no longer located in a first area indicated by the first area information.

Optionally, the correspondence may be carried, for example, in an NG-RAN Node Configuration Update. This is not limited.

It should be noted herein that, that the second donor sends, to the first donor, a correspondence between updated area information and the area information that is not updated in S505 is merely an example in which the first access network device obtains the correspondence between the updated area information and the area information that is not updated. However, this does not constitute a limitation on this application. For example, the first access network device may alternatively obtain the correspondence between the updated area information and the area information that is not updated in the following two manners:
(1) A core network device sends, to the first donor, the correspondence between the updated area information and the area information that is not updated. Correspondingly, the first access network device receives the updated area information and the area information that is not updated that are sent by the core network device.
(2) The first access network device obtains information that is in the second donor (or the CU included in the second donor) and that is used for determining the second area information. The first access network device determines, based on the information used for determining the second area information, the correspondence between the updated area information and the area information that is not updated.

It should be noted herein that, in this embodiment, there is no definite sequence of S503 to S505.

S506: The first access network device uses the area information (namely, the old area information) in the RNA of the terminal device as an index, and replaces the old area information in the RNA of the terminal device with the new area information in the correspondence.

**In** this step, replacing the old area information in the RNA of the terminal device means replacing the old area information in the RNA that is configured for the terminal device in the first access network device.

It should be understood that, the old area information in the RNA of the terminal device is replaced with the new area information, so that the first area indicated by the old area information in the RNA of the terminal device may be replaced with the second area indicated by the new area information.

S507: The terminal device skips sending the RNAU.

It may be understood that, according to the communication method provided in this embodiment, when the donor connected to the first relay node is switched from the first donor to the second donor, because the first access network device replaces, with the new area information, the old area information in the RNA that is configured for the terminal device in the first access network device, if the first access network device needs to page the terminal device, the first access network device performs paging in the area indicated by the new area information instead of the area indicated by the old area information. In this way, even if the terminal device skips sending the RNAU, it can be ensured that the first access network device successfully pages the terminal device that is originally located in the first area indicated by the old area information and that is currently located in the second area (also referred to as a new area) indicated by the new area information. It may be further understood that, because the terminal device skips sending the RNAU, power consumption of the terminal device can be further reduced.

It should be understood that the terminal device in S507 may be an on-board UE.

It should be further understood that, in addition to the on-board UE, the terminal device accessing the first relay node may further include a terminal device (also referred to as a surrounding UE) that accesses the first relay node but is not in the mobile device. Therefore, when the first information is sent in the broadcast manner, for the terminal device, in this embodiment, if the terminal device determines that the terminal device is an on-board UE (in other words, for the on-board UE), the terminal may be prohibited, based on an indication of the broadcast first information, from sending the RNAU. However, if the terminal device determines that the terminal device is a surrounding UE (in other words, for the surrounding UE), even if the terminal device receives the broadcast first information indicating to prohibit the terminal device from sending the RNAU, the terminal device may not perform execution based on an indication of the first information. In other words, the surrounding UE may not receive or ignore the broadcast first information. For example, in this case, at least one of S502 to S506 may not be performed.

In other words, in this embodiment, from a perspective of the terminal device, the terminal device may autonomously determine, based on the indication of the first information in broadcast, whether to prohibit sending of the RNAU. For example, when the terminal device determines that the terminal device is the surrounding UE, even if the broadcast first information indicates that sending of the RNAU needs to be prohibited, the terminal device skips performing execution based on the indication information; and when the terminal device determines that the terminal device is the on-board UE, the terminal device may be prohibited, based on the indication of the broadcast first information, from sending the RNAU.

For example, it should be further noted that, in this embodiment, for the terminal device, if the broadcast does not carry the first information, an RNAU function is enabled by default.

Optionally, in this embodiment, a second access network device may broadcast a new system message, where the new system message includes the new area information and first relay node indication information (which may also be referred to as indication information for the first relay node in this application). The first relay node indication information indicates that the first relay node includes the new area.

It should be understood that the new area is an area to which a cell belongs when the terminal device accesses the cell of the first relay node. That is, the new area includes the cell of the first relay node currently accessed by the terminal device. Therefore, in this embodiment, when the first relay node indication information indicates that the first relay node includes the new area, it may also be considered that the first relay node indication information indicates that the cell currently accessed by the terminal device is a cell provided by the first relay node.

In addition, it should be emphasized that, that a second access network device broadcasts a new system message mentioned in this application does not mean that a new system message is introduced, but a system message that includes the new area information in the system message is referred to as the new system message.

Optionally, in the embodiment shown in FIG. 5, when the first information is provided for the terminal device in the broadcast manner, the first relay node indication information, the new area information, and the first information may not be in a same system message.

Optionally, in this embodiment, regardless of the on-board UE or the surrounding UE, the on-board UE or the surrounding UE skips initiating the RNAU provided that the on-board UE or the surrounding UE receives at least one of the first relay node indication information and the first information, for example, receives the first relay node indication information and/or the first information based on a broadcast message.

With reference to FIG. 3 and FIG. 5, the foregoing describes a solution of how to ensure that the access network device finds the terminal device through paging when the terminal device skips sending the RNAU.

In an optional embodiment, this application further provides a solution of how to ensure that a core network device finds a terminal device through paging when a network side device that needs to page the terminal device is the core network device and the terminal device skips sending a TAU.

Specifically, when the network side device that needs to page the terminal device is the core network device, a first access network device in this application may send second information to the terminal device accessing a first relay node, where the second information is used for prohibiting the terminal device from sending the TAU.

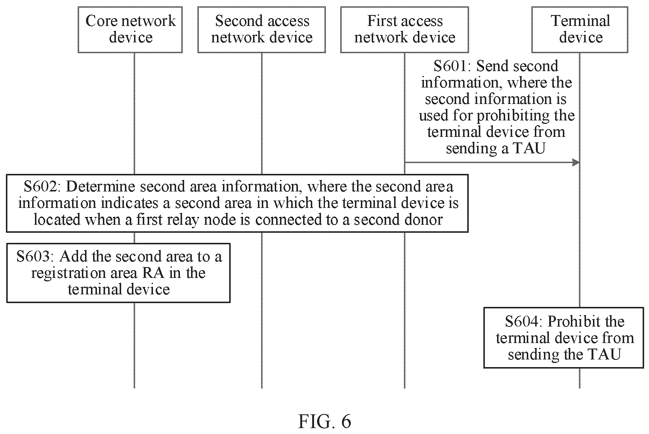

With reference to FIG. 6, the following describes a communication method for ensuring that the core network device finds the terminal device through paging when the terminal device skips sending the TAU according to this application. As shown in FIG. 6, the method may include S601, S602, S603, and S604.

S601: A first access network device sends second information to the terminal device accessing a first relay node. Correspondingly, the terminal device accessing the first relay node receives the second information, where the second information is used for prohibiting the terminal device from sending the TAU.

In this embodiment, the first access network device may send the second information to the terminal device accessing the first relay node. Correspondingly, the terminal device accessing the first relay node may receive the second information. The second information is used for prohibiting the terminal device from sending the TAU.

In other words, the second information has a function of prohibiting the terminal device from sending the TAU. In other words, in this embodiment, after the terminal device receives the second information, the terminal device no longer sends the TAU.

It should be noted that a difference between this step and S301 lies only in that functions of the information sent by the first access network device to the terminal device are different. Specifically, the first information in S301 in the embodiment shown in FIG. 3 is information used for prohibiting the terminal device from sending the RNAU, and the second information in S601 in the embodiment shown in FIG. 6 is information used for prohibiting the terminal device from sending the TAU. For detailed descriptions of the first access network device and the first relay node, refer to the descriptions in the embodiment shown in FIG. 3. Details are not described herein again.

Similarly, a specific form of the second information is not limited in this embodiment.

For example, in a first implementation, a Boolean value may indicate the terminal device to disable/enable a function of initiating the TAU. For example, a bit 0 indicates the function of initiating the TAU by the terminal device, and a bit 1 (namely, the second information) indicates a function of skipping initiating the TAU by the terminal device. For another example, the bit 0 (namely, the second information) indicates the function of skipping initiating the TAU by the terminal device, and the bit 1 indicates the function of initiating the TAU by the terminal device.

For example, in a second implementation, the second information may indicate, by setting a timer (timer), the terminal device to disable the function of initiating the TAU. For example, the second information is a disable TAU timer. It may be understood that, in the second implementation, after receiving the timer, the terminal device not only knows that the function of initiating the TAU needs to be disabled, but also knows specific execution duration. In other words, in this manner, the second information may further indicate duration in which the terminal device skips initiating the TAU.

For example, in a third implementation, the second information may alternatively be in a form of a Boolean value + a timer.

It should be understood that, in the foregoing three implementations, dedicated information directly indicates to prohibit the terminal device from sending the TAU. Therefore, in this application, it is also considered that the first access network device explicitly indicates to prohibit the terminal device from sending the TAU.

It should be noted herein that how the first access network device sends the second information to the terminal device is not limited in this embodiment.

For example, in an implementation solution, the second information may be carried in an RRCRelease message and sent to the terminal device.

S602: The core network device determines second area information, where the second area information indicates a second area in which the terminal device is located when the first relay node is connected to a second donor.

In the embodiment shown in FIG. 6, a device for determining the second area information is the core network device, for example, an AMF, instead of an access network device. In other words, in the embodiment shown in FIG. 6, when a donor connected to the first relay node is switched from a first donor to the second donor, the core network device determines the second area information. For detailed descriptions of the second area information, refer to the descriptions in the embodiment shown in FIG. 3. Details are not described herein again.

Specifically, in the embodiment shown in FIG. 6, an implementation in which the core network device determines the second area information is not limited.

For example, in a first implementable manner, the second donor first determines the second area information, and then sends the second area information to the core network device. In other words, the core network device receives the second area information sent by the second donor.

For example, in a second implementable manner, the first donor first determines the second area information, and then sends the second area information to the core network device. In other words, the core network device receives the second area information sent by the first donor.

For another example, in a third implementable manner, the core network device may first obtain information that is in the second donor (or a second CU included in the second donor) and that is used for determining the second area information, and then determine the second area information based on the information used for determining the second area information.

S603: The core network device adds the second area to a registration area RA in the terminal device.

In this embodiment, the RA in the terminal device includes a first area, and the first area is an area in which the terminal device is located when the first relay node is connected to the first donor.

In this embodiment, after obtaining the second area information corresponding to the first relay node when the first relay node is connected to the second donor, the core network device adds the second area indicated by the second area information to the RA in the terminal device, that is, updates the RA in the terminal device.

It should be noted that, in the embodiment shown in FIG. 6, that the core network device adds the second area to an RA in the terminal device means that the second area is added to the RA that is configured for the terminal device in the core network device.

It should be noted that a granularity of an area stored in the RA is a TA level. Therefore, in the embodiment shown in FIG. 6, a granularity of the second area added by the core network device to the RA is a TA. For ease of description, in the embodiment shown in FIG. 6, when the first relay node is connected to the first donor, a TA in which the terminal device is located is referred to as a first TA, and when the first relay node is connected to the second donor, a TA in which the terminal device is located is referred to as a second TA.

For a concept and detailed descriptions of the TA, refer to descriptions in a conventional technology. Details are not described herein.

Similarly, an implementation in which the core network device adds the second area to the RA that is configured for the terminal device in the core network device is not limited in this embodiment.

For example, in a first implementation solution, after the second area (the second TA) corresponding to the terminal device is determined, the second area (the second TA) is directly added to the RA that is configured for the terminal device in the core network device.

For example, in a second implementation solution, the first area (the first TA) in the RA that is configured for the terminal device in the core network device may be deleted, and the second area (the second TA) is added to the RA.

In the second implementation solution, a sequence of deleting, by the core network device, the first area (the first TA) in the RA that is configured for the terminal device in the core network device and adding, by the core network device, the second area (the second TA) to the RA that is configured for the terminal device in the core network device is not limited in this embodiment.

For example, the first area (the first TA) in the RA in the terminal device in the core network device may be first deleted, and then the second area (the second TA) is added to the RA. This manner may also be referred to as replacing the first area (the first TA) with the second area (the second TA).

For example, the second area (the second TA) may be first added to the RA that is configured for the terminal device in the core network device, and then the first area (the first TA) in the RA is deleted.

S604: Prohibit the terminal device from sending the TAU.

In this embodiment, after receiving the second information, the terminal device is prohibited from sending the TAU.

It should be understood that, in this embodiment, when the core network device adds (the second TA) to the RA in the terminal device, if the core network device needs to page the terminal device, the core network device also performs paging in all cells in the second area (the second TA). In addition, because the second area (the second TA) is the area in which the terminal device is located, even if the terminal device skips sending the TAU to the access network device, it can be ensured that the core network device finds the terminal device through paging.

In other words, according to the communication method provided in this application, after the donor connected to the first relay node is switched, the core network device can correctly find the terminal device through paging while the terminal device accessing the first relay node skips initiating the TAU. This not only reduces signaling overheads, but also reduces power consumption of the terminal device.

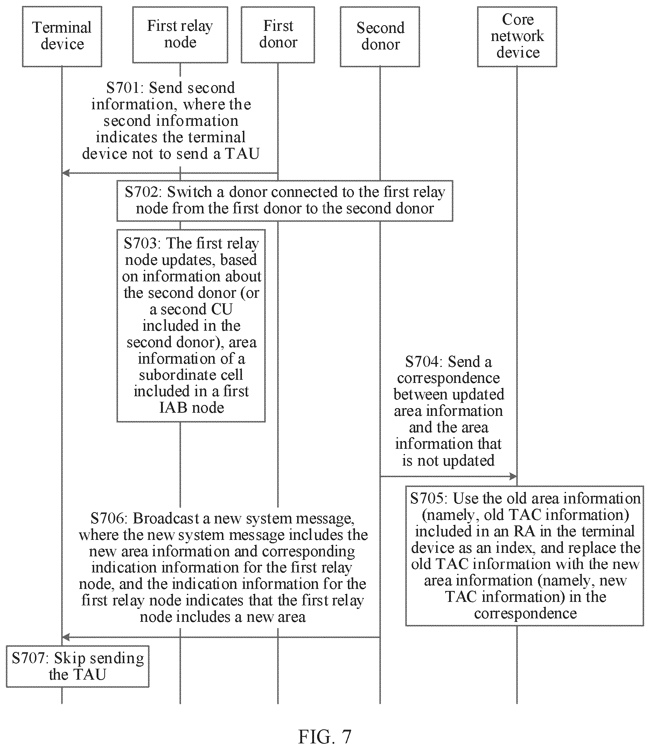

The foregoing describes, with reference to the embodiment shown in FIG. 6, how to ensure that the core network device can correctly find the terminal device through paging when the terminal device skips initiating the TAU. For ease of understanding, a more specific embodiment is described below with reference to FIG. 7, to describe a specific implementation in which it can also be ensured that a core network device can correctly find a terminal device through paging when the terminal device skips initiating a TAU.

As shown in FIG. 7, the method may include S701, S702, S703, S704, S705, S706, and S707.

S701: A first access network sends second information to the terminal device, where the second information indicates the terminal device not to send the TAU.

For detailed descriptions of this step, refer to the descriptions in S601 in the embodiment shown in FIG. 6. Details are not described herein again.

For example, the second information may be provided for the terminal device by using an RRC release message.

For another example, the second information may be provided for the terminal device in a broadcast manner.

Specifically, the first access network device may autonomously determine whether to provide the first information for the terminal device in the broadcast manner. For example, in an implementation, the first access network device may perform determining based on other conditions such as a quantity of on-board UEs that are relatively static with a mobile device and a first access node. For detailed descriptions of this part, refer to the descriptions in S501. Details are not described herein again.

S702: As the mobile device moves, switch a donor connected to the first relay node from a first donor to a second donor.

S703: The first relay node updates, based on information about the second donor (or a second CU included in the second donor), area information of a subordinate cell included in the first relay node.

For example, area information of each subordinate cell is, for example, at least one of the following: an NCGI, a TAC, an RAC, and the like. For detailed descriptions of the NCGI, the TAC, and the RAC, refer to the descriptions of the foregoing related parts in this application. Details are not described herein again.

S704: The second donor sends, to the core network device, a correspondence between updated area information and the area information that is not updated.

For example, the correspondence may be carried in a RAN Configuration Update, to send the correspondence to the core network device.

In this embodiment, the updated area information may be considered as second area information, and the area information that is not updated may be considered as first area information.

Specifically, during implementation, the second donor may send, to the core network device through the second CU, the correspondence between the updated area information and the area information that is not updated. It may be understood that, in this step, after the second donor sends the correspondence to the core network device, in addition to obtaining the second area information, the core network device may further know that the terminal device accessing the first relay node is located in a second area indicated by the second area information, and is no longer located in a first area indicated by the first area information.

It should be noted herein that, that the second donor sends, to the core network device, a correspondence between updated area information and the area information that is not updated in S704 is merely an example in which the core network device obtains the correspondence between the updated area information and the area information that is not updated. However, this does not constitute a limitation on this application. For example, the core network device may alternatively obtain the correspondence between the updated area information and the area information that is not updated in the following two manners:
(1) The first donor sends, to the core network device, the correspondence between the updated area information and the area information that is not updated. Correspondingly, the core network device receives the updated area information and the area information that is not updated that are sent by the first donor.
(2) The core network device obtains information that is in the second donor (or the second CU included in the second donor) and that is used for determining the second area information. The core network device determines, based on the information used for determining the second area information, the correspondence between the updated area information and the area information that is not updated.

S705: The core network device uses the old area information (namely, old TAC information) included in an RA in the terminal device as an index, and replaces the old TAC information with the new area information (namely, new TAC information) in the correspondence.

In this step, replacing the old TAC information means replacing old TAC information in the RA that is configured for the terminal device in the core network device.

It should be understood that, the old TAC information in the RA in the terminal device is replaced with the new TAC information, so that an old TA (a first TA) indicated by the old TAC information in the RA in the terminal device may be replaced with a new TA (a second TA) indicated by the new TAC information.

S706: A second access network device broadcasts a new system message, where the new system message includes the new area information and corresponding indication information for the first relay node, and the indication information for the first relay node indicates that the first relay node includes a new area.

In this embodiment, the second access network device is specifically an access network device/base station including a DU in the first relay node and the second CU.

S707: The terminal device skips sending the TAU.

It may be understood that, according to the communication method provided in this embodiment, when a donor connected to the first relay node is switched from the first donor to the second donor, because the core network device replaces, with the new TA, the old TA in the RA that is configured for the terminal device in the core network device, if the core network device needs to page the terminal, the core network device performs paging in all cells in the new TA instead of all cells in the old TA. In this way, even if the terminal device skips sending the TAU, it can be ensured that the core network device successfully pages the terminal device that is originally located in the old TA and that is currently located in the new TA. It may be further understood that, because the terminal device skips sending the TAU, power consumption of the terminal device can be further reduced.

It should be understood that the terminal device in S707 is an on-board UE.

It should be further understood that, in addition to the on-board UE, the terminal device accessing the first relay node may further include a terminal device (also referred to as a surrounding UE) that accesses the first relay node but is not in the mobile device. Therefore, when the second information is sent in the broadcast manner, for the terminal device, in this embodiment, if the terminal device determines that the terminal device is an on-board UE (in other words, for the on-board UE), the terminal may be prohibited, based on an indication of the broadcast second information, from sending the TAU. However, if the terminal device determines that the terminal device is a surrounding UE (in other words, for the surrounding UE), even if the terminal device receives the broadcast second information indicating to prohibit the terminal device from sending the TAU, the terminal device may not perform execution based on an indication of the second information. In other words, the surrounding UE may not receive or ignore the broadcast second information. For example, in this case, at least one of steps S702 to S707 may not be performed.

In other words, in this embodiment, from a perspective of the terminal device, the terminal device may autonomously determine, based on the indication of the second information in broadcast, whether to prohibit sending of the TAU. For example, when the terminal device determines that the terminal device is the surrounding UE, even if the broadcast second information indicates that sending of the TAU needs to be prohibited, the terminal device skips performing execution based on the indication information; and when the terminal device determines that the terminal device is the on-board UE, the terminal device may be prohibited, based on the indication of the broadcast second information, from sending the TAU.

It should be understood that, for S706 in this embodiment, the new area is an area to which a cell belongs when the terminal device accesses the cell of the first relay node. That is, the new area includes the cell of the first relay node accessed by the terminal device. Therefore, in this embodiment, when the first relay node indication information indicates that the first relay node includes the new area, it may be considered that the first relay node indication information indicates that the cell accessed by the terminal device is a cell provided by the first relay node.

Optionally, in the embodiment shown in FIG. 7, when the second information is provided for the terminal device in the broadcast manner, the first relay node indication information, the new area information, and the second information may not be in a same system message. Optionally, in this embodiment, regardless of the on-board UE or the surrounding UE, the on-board UE or the surrounding UE skips initiating the TAU provided that the on-board UE or the surrounding UE receives at least one of the first relay node indication information and the second information, for example, receives the first relay node indication information and/or the second information based on a broadcast message.

For example, it should be further noted that, in this embodiment, for the terminal device, if the broadcast does not carry the second information, a TAU function is enabled by default.

The foregoing describes, with reference to FIG. 3 and FIG. 5, the solution of how to ensure that the access network device finds the terminal device through paging when the terminal device skips sending the RNAU, and describes, with reference to FIG. 6 and FIG. 7, the solution of how to ensure that the core network device finds the terminal device through paging when the terminal device skips sending the TAU. It can be learned that these embodiments are all solutions in which the network side controls the terminal device not to send the RNAU and/or the TAU. In addition, it should be noted that embodiments shown in FIG. 3 and FIG. 5 are only for a terminal device in an inactive state, and mainly relate to a radio access network side. Embodiments shown in FIG. 6 and FIG. 7 are applicable to a terminal device in all states, and mainly relate to the radio access network side and the core network side.

Optionally, the first information and the second information in this application may alternatively be same information.

In other words, the same information indicates to prohibit the terminal device from sending the RNAU, and also indicates to prohibit the terminal device from sending the TAU.

For example, the same information includes a correspondence between the first area information and the second area information. For detailed descriptions of the first area information and the second area information, refer to the descriptions of the foregoing related parts. Details are not described herein again.

Optionally, in this application, when the first information and the second information are the same information, and the same information includes the correspondence between the first area information and the second area information, the terminal device in this application may further determine, based on the correspondence, not to send the RNAU and/or the TAU. In other words, in this application, when the first information and/or the second information are/is implicit indications/an implicit indication, the terminal device in this application may alternatively autonomously determine not to send the RNAU and/or the TAU.

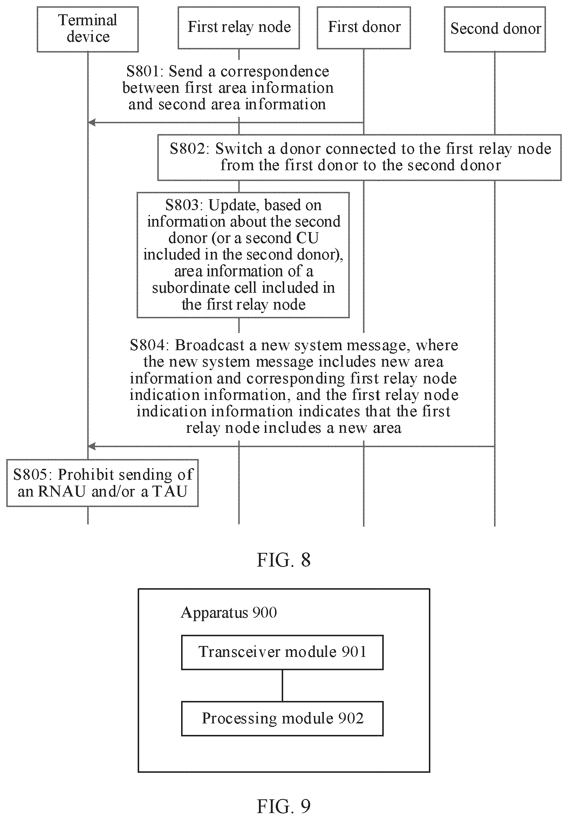

With reference to FIG. 8, the following describes a detailed embodiment of how a terminal device determines, based on a correspondence, not to send an RNAU and/or a TAU when first information sent by a first access network device is the correspondence between first area information and second area information.

As shown in FIG. 8, this embodiment includes S801, S802, S803, S804, and S805.

S801: The first access network device sends the correspondence between the first area information and the second area information to the terminal device.

In this embodiment, the first access network device is specifically a base station including a DU of a first relay node and a first CU. The first relay node is deployed on a mobile device (for example, a vehicle) and moves with the mobile device.

It should be noted herein that how the first access network device obtains the correspondence is not limited in this embodiment.

For example, the correspondence may be obtained by the first access network device from a second donor in advance through a first donor before the first relay node is switched. Alternatively, the correspondence may be obtained by the first access network device from a core network device. Alternatively, the correspondence may be obtained by the first access network device from an OAM.

It should be noted herein that how the first access network device sends the correspondence to the terminal device is not limited in this embodiment.

For example, a first base station may include the correspondence between the first area information and the second area information in an RRC message such as RRCRelease or RRCReconfiguration, and send the RRC message to the terminal device. This is not limited.

It should be noted that S801 is an optional step in this embodiment. That is, S801 may not be performed.

S802: As the mobile device moves, switch a donor connected to the first relay node from the first donor to the second donor.

S803: The first relay node updates, based on information about the second donor (or a second CU included in the second donor), area information of a subordinate cell included in the first relay node.

S804: A second access network device broadcasts a new system message, where the new system message includes new area information and corresponding first relay node indication information, and the first relay node indication information indicates that the first relay node includes a new area.

The new area information is the second area information, and the new area is a second area indicated by the second area information.

Optionally, in this step, during broadcasting, the second access network device may further broadcast the correspondence between the first area information and the second area information. To be specific, after the donor connected to the first relay node is switched from the first donor to the second donor and area information corresponding to the first relay node changes from the first area information to the second area information, a message broadcast by a second base station that includes the first relay node and the second donor further includes the correspondence between the first area information and the second area information.

S805: Prohibit the terminal device from sending the RNAU and/or the TAU.

Specifically, when the first access network device and/or the second access network device provide/provides the correspondence, the terminal device may be prohibited from sending the RNAU and/or the TAU in the following several manners:
(1) After the terminal device directly updates, to the second area information, the first area information in an RNA and/or an RA based on the correspondence, the terminal device is prohibited from sending the RNAU and/or the TAU.
   It may be understood that, in this manner, after the first area information in the RNA and/or the RA in the terminal device is updated to the second area information, because the system message broadcast by the second access network device includes the second area information, the terminal device skips initiating the RNAU and/or the TAU.
(2) After it is determined that the area information broadcast by the second access network device is included in the correspondence, sending of the RNAU and/or the TAU is prohibited.

It should be understood that, for the terminal device accessing the first relay node, if the received broadcast message includes the second area information, because the second area information is included in the correspondence, it may be considered that the terminal device and the first relay node are in a relatively static state. Therefore, the terminal device may be prohibited from sending the RNAU and/or the TAU.

Optionally, in this manner, after the terminal device is prohibited from sending the RNAU and/or the TAU, the terminal device may further replace the first area information in an RNA and/or an RA in the terminal device with the second area information based on the correspondence, to replace a first area with the second area.

(3) When it is determined that the first area information is included in the correspondence broadcast by the second access network device, sending of the RNAU and/or the TAU is prohibited.

It should be understood that, for the terminal device accessing the first relay node, if the first area information of the terminal device is included in the correspondence broadcast by the second base station, it may be considered that the terminal device and the first relay node are in a relatively static state. Therefore, in this implementation, when determining that the first area information is included in the correspondence broadcast by the second access network device, the terminal device is prohibited from sending the RNAU and/or the TAU.

Optionally, in this manner, after the terminal device is prohibited from sending the RNAU and/or the TAU, the terminal device may further replace the first area information in an RNA and/or an RA in the terminal device with the second area information based on the correspondence, to replace a first area with the second area.

Specifically, when there is no S801 and the second access network device does not provide the correspondence, that is, when neither the first access network device nor the second access network device provides the correspondence, the terminal device accessing the first relay node may obtain the second area information from the new system message broadcast by the second access network device, and directly add the second area indicated by the second area information to the RNA and/or the RA in the terminal device, that is, update the RNA and/or the RA in the terminal device.

Optionally, when neither the first access network device nor the second access network device provides the correspondence, the terminal device may further delete the first area in the RNA and/or the RA in the terminal device when directly adding the second area indicated by the second area information to the RNA and/or the RA in the terminal device.

It should be understood that, after the donor connected to the first relay node changes to the second donor, an area in which the terminal device is located changes from the first area to the second area. In other words, in this case, the second area is the area in which the terminal device is located at a current moment. Therefore, in this implementation, in addition to adding the second area to the RNA and/or the RA in the terminal device, the terminal device further deletes the first area.

It should be noted herein that, in this embodiment, a sequence of deleting the first area in the RNA and/or the RA in the terminal device and adding the second area to the RNA and/or the RA in the terminal device is not limited.

For example, the first area in the RNA and/or the RA in the terminal device may be first deleted, and then the second area is added to the RNA and/or the RA in the terminal device. This manner may also be referred to as replacing the first area with the second area.

For example, the second area may be first added to the RNA and/or the RA in the terminal device, and then the first area in the RNA and/or the RA is deleted.

It may be understood that, when neither the first access network device nor the second access network device provides the correspondence, after the terminal device adds the second area indicated by the second area information to the RNA and/or the RA in the terminal device, because the RNA and/or the RA in the terminal device include/includes the second area, even if the second access network device broadcasts the second area information, the terminal device skips initiating the RNAU and/or the TAU.

The foregoing describes the embodiment of how to enable the terminal device not to initiate an update request when the area information of each subordinate cell in the first relay node is updated based on the information about the new donor (or the CU included in the new donor).

However, as described above, after the donor of the first relay node is switched (for example, switched from the first donor to the second donor), there may be a case in which the area information configured for the first relay node remains unchanged. In this case, for a surrounding UE, there may be a problem that the surrounding UE frequently initiates an update request because the surrounding UE changes from originally accessing a subordinate cell of an original serving base station to accessing a subordinate cell of the first relay node.

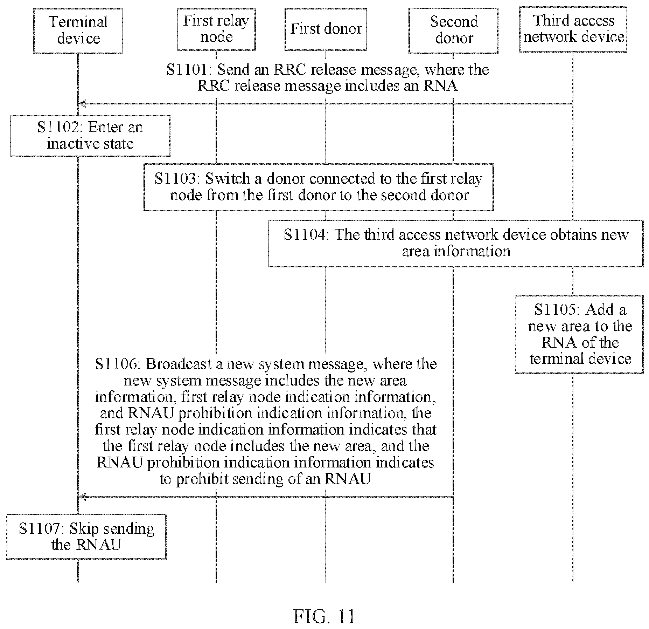

For this problem, with reference to FIG. 11, the following first describes a method for ensuring that, when fixed area information is configured for the first relay node, the original serving base station can correctly find the surrounding UE through paging when the surrounding UE skips initiating an RNAU request and the surrounding UE performs reselection from the subordinate cell of the original serving base station to the subordinate cell of the first relay node for access.

For example, in the communication method provided in FIG. 11, the original serving base station is, for example, a last serving gNB.

For ease of description, in this embodiment, the original serving base station is described as a third base station or a third access network device.

Specifically, as shown in FIG. 11, the method includes the following steps.

S1101: The third access network device sends an RRC release message to the surrounding UE, where the RRC release message includes an RNA.

A terminal device in FIG. 11 is the surrounding UE described herein.

Optionally, when the RRC release message (also referred to as RRCRelease) received by the surrounding UE includes a "suspend" ("suspend") indication, the surrounding UE performs S1102: Enter an inactive state.

S1103: Switch a donor connected to the first relay node from a first donor to a second donor.

S1104: The third access network device obtains new area information.

In this embodiment, the new area information is the fixed area information configured in the first relay node.

It should be noted herein that how to obtain the new area information is not limited in this embodiment.

For example, in a first implementation solution, a second access network device may send, to the third access network device through a second CU, the fixed area information (namely, the new area information) configured for the first relay node. The second access network device includes the second donor and the first relay node.

Optionally, the second access network device may send, to the third access network device, area information of the subordinate cell that is of the first relay node and that is accessed by the surrounding UE.

For a concept of the second access network device, refer to the descriptions in the foregoing embodiments of this application. Details are not described herein again.

For example, in a second implementation solution, a first access network device may send, to the third access network device through a first CU, the fixed area information (namely, the new area information) configured for the first relay node.

Optionally, the first access network device may send, to the third access network device, the area information of the subordinate cell that is of the first relay node and that is accessed by the surrounding UE.

Optionally, during implementation, the second access network device sends, to the third access network device through the first access network device, the fixed area information (namely, the new area information) configured for the first relay node. For example, after the surrounding UE accesses the second access network device, the second access network device sends indication information to the first access network device, to indicate the first access network device to send the new area information to the third access network device.

For a concept of the first access network device, refer to the descriptions in the foregoing embodiments of this application. Details are not described herein again.

S1105: The third access network device adds a new area to the RNA of the surrounding UE.

**In** this embodiment, the third access network device adds the new area to the RNA that is configured for the surrounding UE in the third access network device, that is, updates the RNA that is configured for the surrounding UE in the third access network device.

It should be noted herein that an implementation in which the third access network device adds the new area to the RNA that is configured for the surrounding UE in the third access network device is not limited in this embodiment.

For example, in a first implementation solution, the new area is directly added to the RNA that is configured for the surrounding UE in the third access network device.

For example, in a second implementation solution, an old area in the RNA that is configured for the surrounding UE in the third access network device may be deleted, and the new area is added to the RNA that is configured for the surrounding UE in the third access network device.

Optionally, in the second implementation solution, when the old area in the RNA that is configured for the surrounding UE in the third access network device is deleted, and the new area is added to the RNA that is configured for the surrounding UE in the third access network device, the third access network device first determines a correspondence between the new area information and the old area information.

The old area information is area information that is of a cell in which the surrounding UE is located and that is previously stored in the third access network device.

For example, when the surrounding UE accesses a subordinate cell of the third access network device, area information of a cell in which the surrounding UE is located is an NCGI #11/a TAC #11/an RAC #11. When the surrounding UE accesses the subordinate cell of the first relay node, the area information of the cell in which the surrounding UE is located is an NCGI #22/a TAC #22/an RAC #22, and in this case, the third access network device may determine that the correspondence between the new area information and the old area information is as follows: The NCGI #11 corresponds to the NCGI #22, the TAC #11 corresponds to the TAC #22, and the RAC #11 corresponds to the RAC #22; or the correspondence between the new area information and the old area information that correspond to the surrounding UE is as follows: The NCGI #22 corresponds to the NCGI #11, the TAC #22 corresponds to the TAC #11, and the RAC #22 corresponds to the RAC #11.

After the correspondence between the new area information and the old area information is determined, the old area is replaced with the new area by using the correspondence.

For example, the old area in the RNA that is configured for the surrounding UE in the third access network device may be first deleted, and then the new area is added to the RNA. This manner may also be referred to as replacing the old area with the new area.

For example, the new area may be first added to the RNA that is configured for the surrounding UE in the third access network device, and then the old area in the RNA is deleted.

S1106: The second access network device broadcasts a new system message, where the new system message includes the new area information, first relay node indication information, and RNAU prohibition indication information, the first relay node indication information indicates that the first relay node includes the new area, and the RNAU prohibition indication information indicates to prohibit sending of an RNAU.

For detailed descriptions of the first relay node indication information and the new system message, refer to the descriptions in the foregoing related embodiments. Details are not described herein again.

It should be noted herein that a specific form of the RNAU prohibition indication information is not limited in this embodiment.

For example, in a first implementation, a Boolean value may indicate to disable/enable a function of initiating the RNAU. For example, a bit 0 indicates the function of initiating the RNAU, and a bit 1 indicates a function of skipping initiating the RNAU by the terminal device. For another example, the bit 0 indicates the function of skipping initiating the RNAU, and the bit 1 indicates the function of initiating the RNAU.

For example, in a second implementation, the RNAU prohibition indication information may indicate, by setting a timer (timer), to disable the function of initiating the RNAU. For example, the RNAU prohibition indication information is a disable RNAU timer. It may be understood that, in the second implementation, after receiving the timer, the surrounding UE not only knows that the function of initiating the RNAU needs to be disabled, but also knows specific execution duration.

For example, in a third implementation, the RNAU prohibition indication information may alternatively be in a form of a Boolean value + a timer.

Optionally, whether the system message includes the RNAU prohibition indication information may be determined based on other conditions such as a quantity of surrounding UEs. For a detailed implementation, refer to the descriptions in S501 in the embodiment shown in FIG. 5. Details are not described herein again.

Optionally, in the embodiment shown in FIG. 11, when the RNAU prohibition indication information is provided for the surrounding UE in a broadcast manner, the first relay node indication information, the new area information, and the RNAU prohibition indication information may not be in a same system message.

S1107: The surrounding UE skips initiating the RNAU based on an indication of the RNAU prohibition indication information.

It may be understood that, according to the communication method provided in this embodiment, after the donor connected to the first relay node is switched from the first donor to the second donor, because the third access network device adds the new area to the RNA that is configured for the surrounding UE in the third access network device, in this case, if the third access network device needs to page the surrounding UE, the third access network device may perform paging in an area indicated by the new area information, so that it can be ensured that the surrounding UE is found through paging when the surrounding UE skips sending the RNAU.

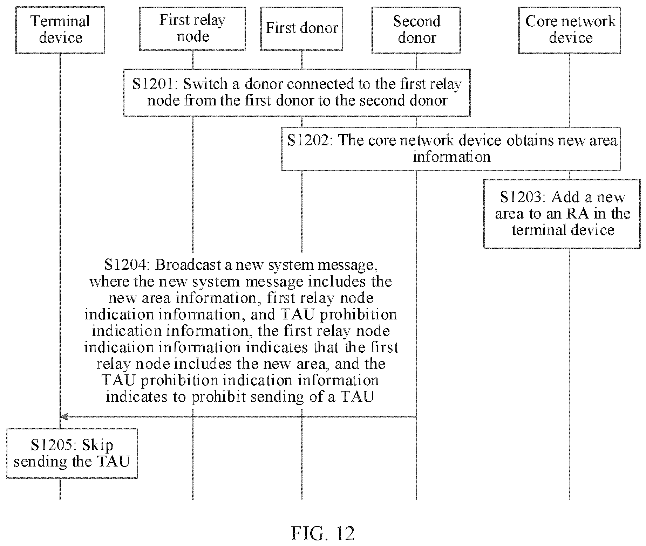

With reference to FIG. 12, the following describes a method for ensuring that, when fixed area information is configured for a first relay node, a core network device correctly finds a surrounding UE through paging when the surrounding UE skips initiating a TAU and the surrounding UE changes from accessing a subordinate cell of a third access network device to accessing a subordinate cell of the first relay node.

Specifically, as shown in FIG. 12, the method includes the following steps.

S1201: Switch a donor connected to the first relay node from a first donor to a second donor.

S1202: The core network device obtains new area information.

In this embodiment, the new area information is the fixed area information configured in the first relay node.

It should be noted herein that how to obtain the new area information is not limited in this embodiment.

For example, in a first implementation solution, as shown in S 1202 in FIG. 12, a second access network device may send, to the core network device through a second CU, the fixed area information (namely, the new area information) configured for the first relay node. The second access network device includes the second donor and the first relay node.

Optionally, the second access network device may send, to the core network device, area information of a subordinate cell that is of the first relay node and that is accessed by the surrounding UE.

For example, in a second implementation solution, a first access network device may send, to the core network device through a first CU, the fixed area information (namely, the new area information) configured for the first relay node.

Optionally, the first access network device may send, to the core network device, the area information of the subordinate cell that is of the first relay node and that is accessed by the surrounding UE.

Optionally, during implementation, the second access network device sends, to the core network device through the first access network device, the fixed area information (namely, the new area information) configured for the first relay node. For example, after the surrounding UE accesses the second access network device, the second access network device sends indication information to the first access network device, to indicate the first access network device to send the new area information to the core network device.

For a concept of the first access network device, refer to the descriptions in the foregoing embodiments of this application. Details are not described herein again.

S 1203: The core network device adds a new area to an RA in the surrounding UE.

In this embodiment, the core network device adds the new area to the RA that is configured for the surrounding UE in the core network device, that is, updates the RA that is configured for the surrounding UE in the core network device.

It should be noted herein that an implementation of how to add the new area to the RA that is configured for the surrounding UE in the core network device is not limited in this embodiment.

For example, in a first implementation solution, the new area is directly added to the RA that is configured for the surrounding UE in the core network device.

For example, in a second implementation solution, an old area in the RA that is configured for the surrounding UE in the core network device may be deleted, and the new area is added to the RA that is configured for the surrounding UE in the core network device.

Optionally, in the second implementation solution, when the old area in the RA that is configured for the surrounding UE in the core network device is deleted, and the new area is added to the RA that is configured for the surrounding UE in the core network device, the core network device first determines a correspondence between the new area information and the old area information, the correspondence is then used for replacing the old area with the new area. The old area information is area information that is of a cell in which the surrounding UE is located and that is previously stored in the third access network device.

For example, the old area in the RA that is configured for the surrounding UE in the third access network device may be first deleted, and then the new area is added to the RA. This manner may also be referred to as replacing the old area with the new area.

For example, the new area may be first added to the RA that is configured for the surrounding UE in the third access network device, and then the old area in the RA is deleted.

S 1204: The second access network device broadcasts a new system message, where the new system message includes the new area information, first relay node indication information, and TAU prohibition indication information, the first relay node indication information indicates that the first relay node includes the new area, and the TAU prohibition indication information indicates to prohibit sending of the TAU.

It should be noted herein that a specific form of the TAU prohibition indication information is not limited in this embodiment.

For example, in a first implementation, a Boolean value may indicate to disable/enable a function of initiating the TAU. For example, a bit 0 indicates the function of initiating the TAU, and a bit 1 indicates a function of skipping initiating the TAU by the terminal device. For another example, the bit 0 indicates the function of skipping initiating the TAU, and the bit 1 indicates the function of initiating the TAU.

For example, in a second implementation, the TAU prohibition indication information may indicate, by setting a timer (timer), to disable the function of initiating the TAU. For example, the TAU prohibition indication information is a disable TAU timer. It may be understood that, in the second implementation, after receiving the timer, the surrounding UE not only knows that the function of initiating the TAU needs to be disabled, but also knows specific execution duration.

For example, in a third implementation, the TAU prohibition indication information may alternatively be in a form of a Boolean value + a timer.

Optionally, in the embodiment shown in FIG. 12, when the TAU prohibition indication information is provided for the surrounding UE in a broadcast manner, the first relay node indication information, the new area information, and the TAU prohibition indication information may not be in a same system message.

S 1205: The surrounding UE skips initiating the TAU based on an indication of the TAU prohibition indication information.

It may be understood that, according to the communication method provided in this embodiment, when the donor connected to the first relay node is switched from the first CU to the second CU, because the core network device adds the new area to the RA that is configured for the surrounding UE in the third access network device, in this case, if the core network device needs to page the surrounding UE, the core network device may perform paging in an area indicated by the new area information, so that it can be ensured that the core network device finds the surrounding UE through paging when the surrounding UE skips sending the TAU.

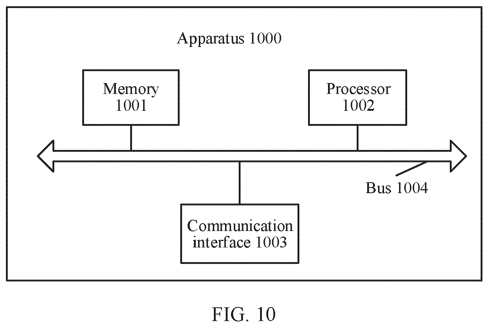

The foregoing describes in detail the communication methods in embodiments of this application with reference to FIG. 2 to FIG. 8. The following describes in detail communication apparatuses according to embodiments of this application with reference to FIG. 9 and FIG. 10.

FIG. 9 is a diagram of a structure of a communication apparatus according to an embodiment of this application. Specifically, as shown in FIG. 9, the apparatus 900 includes a transceiver module 901 and a processing module 902.

In a first embodiment, the transceiver module 901 is configured to send first information to a terminal device accessing a first relay node, where the first information is used for prohibiting the terminal device from sending a radio access network-based notification area update RNAU; and the processing module 902 is configured to: determine second area information, and add a second area to a radio access network-based notification area RNA of the terminal device, where the second area information indicates the second area in which the terminal device is located when the first relay node is connected to a second donor; and the RNA of the terminal device includes a first area, and the first area is an area in which the terminal device is located when the first relay node is connected to a first donor.

In a possible implementation, the processing module 902 is further configured to delete the first area in the RNA of the terminal device.

In a possible implementation, the second area information includes an identifier of the terminal device and/or an identifier indicating the second area.

In a possible implementation, the transceiver module 901 is further configured to receive, through a first CU in the first donor, the second area information sent by the second donor.

In a possible implementation, the transceiver module 901 is further configured to receive, through a first CU in the first donor, the second area information sent by a core network device.

In a possible implementation, the transceiver module 901 is further configured to obtain, through a first CU in the first donor, information that is in the second donor and that is used for determining the second area information; and the processing module 902 is further configured to determine the second area information based on the information that is in the second donor and that is used for determining the second area information.

In a possible implementation, the transceiver module 901 is further configured to send second information to the terminal device accessing the first relay node, where the second information is used for prohibiting the terminal device from sending a tracking area update TAU.

In a possible implementation, the first information further indicates duration in which the terminal device is prohibited from sending the RNAU, and the second information further indicates duration in which the terminal device is prohibited from sending the TAU.

In a possible implementation, the first information and the second information are same information.

In a possible implementation, the same information includes a correspondence between first area information and the second area information, and the first area information indicates the first area.

In a second embodiment, the transceiver module 901 is configured to receive first information and/or second information sent by a first access network device, where the first information is used for prohibiting a terminal device from sending a radio access network-based notification area update RNAU, the second information is used for prohibiting the terminal device from sending a tracking area update TAU, and the terminal device accesses a first relay node; and the processing module 902 is configured to prohibit sending of the RNAU and/or the TAU.

In a possible implementation, the first information further indicates duration in which the terminal device is prohibited from sending the RNAU, and the second information further indicates duration in which the terminal device is prohibited from sending the TAU.

In a possible implementation, the first information and the second information are same information.

In a possible implementation, the same information includes a correspondence between first area information and second area information, the first area information indicates a first area included in an RNA and/or a registration area RA in the terminal device, the first area is an area in which the terminal device is located when the first relay node is connected to a first donor, and the second area information indicates a second area in which the terminal device is located when the first relay node is connected to a second donor.

In a possible implementation, the processing module 902 is further configured to: after determining that area information broadcast by a second access network device is included in the correspondence, prohibit sending of the RNAU and/or the TAU, where the second access network device includes the second donor and the first relay node.

In a possible implementation, the processing module 902 is further configured to: when determining that first area information is included in a message broadcast by a second access network device, prohibit sending of the RNAU and/or the TAU. The second access network device includes a second donor and the first relay node, the message broadcast by the second access network device includes a correspondence between first area information and second area information, the first area information indicates a first area included in an RNA and/or an RA in the terminal device, the first area is an area in which the terminal device is located when the first relay node is connected to a first donor, and the second area information indicates a second area in which the terminal device is located when the first relay node is connected to a second donor.

In a possible implementation, the processing module 902 is further configured to replace the first area information in the RNA and/or the RA with the second area information.

In a possible implementation, the second area information includes an identifier of the terminal device and/or an identifier indicating the second area.

In a third embodiment, the transceiver module 901 is configured to obtain second area information, where the second area information indicates a second area in which a terminal device is located when a first relay node is connected to a second donor, and the terminal device accesses the first relay node; and the processing module 902 is configured to add the second area to a radio access network-based notification area RNA and/or a registration area RA in the terminal device, where the RNA and/or the RA in the terminal device include/includes a first area, and the first area is an area in which the terminal device is located when the first relay node is connected to a first donor.

In a possible implementation, the processing module 902 is further configured to delete the first area in the RNA and/or the RA in the terminal device.

In a possible implementation, the second area information includes an identifier of the terminal device and/or an identifier indicating the second area.

In a possible implementation, the transceiver module 901 is further configured to receive the second area information sent by a first access network device, where the first access network device includes the first donor and the first relay node.

In a possible implementation, the first access network device sends a radio resource control RRC message carrying the second area information to the terminal device.

In a possible implementation, the transceiver module 901 is further configured to receive the second area information broadcast by a second access network device.

FIG. 10 is a diagram of a structure of a communication apparatus according to another embodiment of this application. The apparatus shown in FIG. 10 may be configured to perform the method in any one of the foregoing embodiments.

As shown in FIG. 10, the apparatus 1000 in this embodiment includes a memory 1001 and a processor 1002. Optionally, the apparatus 1000 further includes a communication interface 1003 and a bus 1004. The memory 1001, the processor 1002, and the communication interface 1003 are communicatively connected to each other through the bus 1004.

The memory 1001 may be a read-only memory (read-only memory, ROM), a static storage device, a dynamic storage device, or a random access memory (random access memory, RAM). The memory 1001 may store a program. When the program stored in the memory 1001 is executed by the processor 1002, the processor 1002 is configured to perform steps of the methods shown in FIG. 3 to FIG. 8.

The processor 1002 may be a general-purpose central processing unit (central processing unit, CPU), a microprocessor, an application-specific integrated circuit (application-specific integrated circuit, ASIC), or one or more integrated circuits, and is configured to execute a related program, to implement the methods shown in FIG. 3 to FIG. 8 in this application.

Alternatively, the processor 1002 may be an integrated circuit chip, and has a signal processing capability. In an implementation process, the steps of the methods in FIG. 3 to FIG. 8 in embodiments of this application may be completed by using an integrated logic circuit of hardware in the processor 1002 or by using instructions in a form of software.

The foregoing processor 1002 may be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1001. The processor 1002 reads information in the memory 1001, and completes, in combination with hardware of the processor 1002, functions that need to be performed by units included in the apparatus in this application. For example, the processor 1002 may perform steps/functions in embodiments shown in FIG. 3 to FIG. 8.

The communication interface 1003 may use, but not limited to, a transceiver apparatus of a transceiver type, to implement communication between the apparatus 1000 and another device or a communication network.

The bus 1004 may include a path for transmitting information between the components (for example, the memory 1001, the processor 1002, and the communication interface 1003) of the apparatus 1000.

It should be understood that the apparatus 1000 shown in this embodiment of this application may be an electronic device, or may be a chip configured in the electronic device. The apparatus 1000 may be deployed in a terminal device, or may be deployed in a network device.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded or executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending first information to a terminal device accessing a first relay node, wherein the first information is used for prohibiting the terminal device from sending a radio access network-based notification area update RNAU;
determining second area information, wherein the second area information indicates a second area in which the terminal device is located when the first relay node is connected to a second donor; and
adding the second area to a radio access network-based notification area RNA of the terminal device, wherein
the RNA of the terminal device comprises a first area, and the first area is an area in which the terminal device is located when the first relay node is connected to a first donor.

2. The method according to claim 1, wherein the method further comprises:
deleting the first area in the RNA of the terminal device.

3. The method according to claim 1 or 2, wherein the second area information comprises an identifier of the terminal device and/or an identifier indicating the second area.

4. The method according to any one of claims 1 to 3, wherein determining the second area information comprises:
receiving, through a first CU in the first donor, the second area information sent by the second donor.

5. The method according to any one of claims 1 to 3, wherein determining the second area information comprises:
receiving, through a first CU in the first donor, the second area information sent by a core network device.

6. The method according to any one of claims 1 to 3, wherein determining the second area information comprises:
obtaining, through a first CU in the first donor, information that is in the second donor and that is used for determining the second area information; and
determining the second area information based on the information that is in the second donor and that is used for determining the second area information.

7. The method according to any one of claims 1 to 6, wherein the method further comprises:
sending second information to the terminal device accessing the first relay node, wherein the second information is used for prohibiting the terminal device from sending a tracking area update TAU.

8. The method according to claim 7, wherein the first information further indicates duration in which the terminal device is prohibited from sending the RNAU, and the second information further indicates duration in which the terminal device is prohibited from sending the TAU.

9. The method according to claim 7 or 8, wherein the first information and the second information are same information.

10. The method according to claim 9, wherein the same information comprises a correspondence between first area information and the second area information, and the first area information indicates the first area.

11. A communication method, comprising:
receiving first information and/or second information sent by a first access network device, wherein the first information is used for prohibiting a terminal device from sending a radio access network-based notification area update RNAU, the second information is used for prohibiting the terminal device from sending a tracking area update TAU, and the terminal device accesses a first relay node; and
prohibiting sending of the RNAU and/or the TAU.

12. The method according to claim 11, wherein the first information further indicates duration in which the terminal device is prohibited from sending the RNAU, and the second information further indicates duration in which the terminal device is prohibited from sending the TAU.

13. The method according to claim 11 or 12, wherein the first information and the second information are same information.

14. The method according to any one of claims 11 to 13, wherein the same information comprises a correspondence between first area information and second area information, the first area information indicates a first area comprised in an RNA and/or a registration area RA in the terminal device, the first area is an area in which the terminal device is located when the first relay node is connected to a first donor, and the second area information indicates a second area in which the terminal device is located when the first relay node is connected to the second donor.

15. The method according to claim 14, wherein prohibiting sending of the RNAU and/or the TAU comprises:
after determining that area information broadcast by a second access network device is comprised in the correspondence, prohibiting sending of the RNAU and/or the TAU, wherein the second access network device comprises the second donor and the first relay node.

16. The method according to any one of claims 11 to 13, wherein prohibiting sending of the RNAU and/or the TAU comprises:
when determining that first area information is comprised in a message broadcast by a second access network device, prohibiting sending of the RNAU and/or the TAU, wherein
the second access network device comprises the second donor and the first relay node, the message broadcast by the second access network device comprises a correspondence between the first area information and second area information, the first area information indicates a first area comprised in an RNA and/or an RA in the terminal device, the first area is an area in which the terminal device is located when the first relay node is connected to a first donor, and the second area information indicates a second area in which the terminal device is located when the first relay node is connected to the second donor.

17. The method according to claim 15 or 16, wherein after prohibiting sending of the RNAU and/or the TAU, the method further comprises:
replacing the first area information in the RNA and/or the RA with the second area information.

18. The method according to any one of claims 14 to 17, wherein the second area information comprises an identifier of the terminal device and/or an identifier indicating the second area.

19. A communication method, comprising:
obtaining second area information, wherein the second area information indicates a second area in which a terminal device is located when a first relay node is connected to a second donor, and the terminal device accesses the first relay node; and
adding the second area to a radio access network-based notification area RNA and/or a registration area RA in the terminal device, wherein
the RNA and/or the RA in the terminal device comprise/comprises a first area, and the first area is an area in which the terminal device is located when the first relay node is connected to a first donor.

20. The method according to claim 19, wherein the method further comprises:
deleting the first area in the RNA and/or the RA in the terminal device.

21. The method according to claim 19 or 20, wherein the second area information comprises an identifier of the terminal device and/or an identifier indicating the second area.

22. The method according to any one of claims 19 to 21, wherein obtaining the second area information comprises:
receiving the second area information sent by a first access network device, wherein the first access network device comprises the first donor and the first relay node.

23. The method according to claim 22, wherein the first access network device sends a radio resource control RRC message carrying the second area information to the terminal device.

24. The method according to any one of claims 19 to 21, wherein obtaining the second area information comprises:
receiving the second area information broadcast by a second access network device.

25. A communication apparatus, comprising a processor, wherein the processor is coupled to a memory;
the memory is configured to store program instructions; and
the processor is configured to invoke the program instructions in the memory to perform the method according to any one of claims 1 to 10.

26. A communication apparatus, comprising a processor, wherein the processor is coupled to a memory;
the memory is configured to store program instructions; and
the processor is configured to invoke the program instructions in the memory to perform the method according to any one of claims 11 to 18.

27. A communication apparatus, comprising a processor, wherein the processor is coupled to a memory;
the memory is configured to store program instructions; and
the processor is configured to invoke the program instructions in the memory to perform the method according to any one of claims 19 to 24.

28. A computer-readable medium, wherein the computer-readable medium stores program code for computer execution, and the program code comprises instructions used for performing the method according to any one of claims 1 to 10, claims **11** to 18, or claims 19 to 24.

29. A computer program product, wherein the computer program product comprises computer program code, and when the computer program code is run on a computer, the computer is enabled to implement the method according to any one of claims 1 to 10, claims **11** to 18, or claims 19 to 24.

30. A communication system, comprising the communication apparatus according to claim 25, the communication apparatus according to claim 26, and the communication apparatus according to claim 27.
